(19) Europäisches Patentamt
European Patent Office
Office européen des brevets

(11) EP 4 183 748 A1

(12) **EUROPEAN PATENT APPLICATION**

(43) Date of publication:
**24.05.2023 Bulletin 2023/21**

(21) Application number: **22175125.8**

(22) Date of filing: **24.05.2022**

(51) International Patent Classification (IPC):
***C01G 27/02*** *(2006.01)*

(52) Cooperative Patent Classification (CPC):
**C01G 27/02;** C01P 2004/62; C01P 2006/12

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.11.2021 EP 21210057**

(71) Applicant: **Universität Basel**
**4001 Basel (CH)**

(72) Inventors:
- **DEBLOCK, Loren**
**BE 9000 Gent (BE)**
- **DE ROO, Jonathan**
**CH 4001 Basel (BE)**

(74) Representative: **Schulz Junghans Patentanwälte PartGmbB**
**Großbeerenstraße 71**
**10963 Berlin (DE)**

# (54) HAFNIUM (IV) OXIDE NANOPARTICLES AND AQUEOUS COMPOSITIONS THEREOF

(57) The invention relates to a hafnium (IV) oxide ($HfO_2$) nanoparticle nanocrystal comprising or having a diameter equal or less than (≤) 15 nm, stabilized by a plurality of dispersant molecules attached to its surface. The dispersant molecules comprise of a catechol or gallol surface adsorption moiety and an oligo(ethyleneglycol) moiety.

The invention further relates to a composition of such nanoparticles in stable colloidal suspension at physiological pH, and the use of the composition in medical treatment and diagnostic applications, particularly to enhance radiotherapy and as an X ray contrast agent.

In yet another aspect, the invention provides a method for manufacturing compositions and nanoparticles according to the invention.

EP 4 183 748 A1

## Description

Field:

The present invention relates to hafnium (IV) oxide nanoparticles that are associated with surface-adsorbed oligo(ethylenglycol) moieties. The invention further relates to compositions comprising the nanoparticles according to the invention for use as a pharmaceutical or a diagnostic.

Background of the Invention

Colloidal nanocrystals (NCs) have been considered for a multitude of biomedical applications, e.g., bio-imaging, drug delivery, photothermal therapy, and radiotherapy enhancement. These NCs are typically hybrid objects, consisting of an inorganic core capped with organic ligands. Ligands determine the interactions between NC and solvent and the stability of the nanocolloid. In the case of biomedical applications, controlling the NC surface chemistry is key since it will play a role in particle agglomeration, cellular uptake, protein repelling or adsorption, cytotoxicity, circulation time and targeted approaches. While surface chemistry is important for all types of NCs (chalcogenides, pnictides, halides, and metal NCs), here is not one solution that fits all. For example, thiolates and thiols have a strong binding affinity to Au and CdSe NCs but interact poorly with metal oxide NCs.

Metal oxide NCs have been particularly successful in nanomedicine. Three types of inorganic NCs have achieved clinical translation and two of them are oxides; iron oxide and hafnium oxide (Min, Y. Chemical Reviews 2015, 115 (19), 11147-11190). These particles are often first synthesized in nonpolar solvents, stabilized by surfactants (usually with a carboxylate or phosphonate head group and an aliphatic tail). Carboxylic acids (e.g., oleic acid) dissociate on the metal oxide surface, with carboxylates binding to surface metals sites and protons to surface oxygen atoms. This binding motif is written as NC(XX') since both proton and carboxylate are X-type ligands. In nonpolar solvents, carboxylic acids are quantitatively exchanged by phosphonic acids in an X-for-X ligand exchange process. Indeed, phosphonic acids are very strong ligands for oxide surfaces. In contrast, catechol was found to be a rather weak ligand, only able to exchange a minor fraction of oleic acid. There is thus a clear order in binding strength in nonpolar solvents: catechol < carboxylic acid < phosphonic acid.

In aqueous (or other polar) environments, the order is less clear, and further complicated by variable factors such as pH and salt concentration. For example, carboxylic acids are frequently used to stabilize metal oxide NCs in water. They are able to provide colloidal stability in static systems with no competing ligands, but not in phosphate buffered saline (PBS) or cell culture media. The binding affinity is significantly increased for multidentate carboxylate ligands such as polymers. In general, literature reports agree that carboxylic acids are the weakest ligands in water, weaker than phosphonic acids or catechols. The literature is however inconclusive as to whether phosphonic acids or catechols are the best ligands. Despite the common usage of phosphonic acids and catechols in metal oxide NC functionalization, there is no clear consensus on the relative binding affinity. Furthermore, a direct link between ligand binding equilibria and the final colloidal stability of the NCs is usually not made.

Based on the above-mentioned state of the art, the objective of the present invention is to provide means and methods to provide better nanoparticle compositions for use in medical applications. This objective is attained by the subject-matter of the independent claims of the present specification, with further advantageous embodiments described in the dependent claims, examples, figures and general description of this specification.

Summary of the Invention

One aspect of the invention relates to a nanoparticle comprising a nanocrystal comprising or essentially consisting of hafnium (IV) oxide ($HfO_2$) having a diameter equal or less than (≤) 15 nm, the nanocrystal being stabilized by a plurality of dispersant molecules attached to the surface of the nanocrystal.

The dispersant molecules comprise or essentially consist of a surface adsorption moiety selected from the group comprising a catechol or a gallol, and an oligo(ethyleneglycol) moiety.

The invention, in another aspect, relates to a composition of nanoparticles as described herein. The composition provides nanoparticles in stable colloidal suspension at physiological pH.

Another aspect of the invention relates to the use of the nanoparticles and compositions described herein in treatment and diagnostic applications, particularly to enhance radiotherapy and as an X ray contrast agent.

The present invention also relates a pharmaceutical composition comprising a nanoparticle or nanoparticle suspension according the present and at least one pharmaceutically acceptable carrier, diluent or excipient.

In yet another aspect, the invention provides a method for manufacturing compositions and nanoparticles according to the invention.

*Terms and definitions*

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising," "having," "containing," and "including," and other similar forms, and grammatical equivalents thereof, as used herein, are intended to be equivalent in meaning and to be open-ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of" or "consisting of."

Where a range of values is provided, it is understood that each intervening value, to the tenth of the unit of the lower limit, unless the context clearly dictates otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a," "or," and "the" include plural referents unless the context clearly dictates otherwise.

Unless defined otherwise, all technical and scientific terms used herein have the same meaning as commonly understood by one of ordinary skill in the art (e.g., in cell culture, molecular genetics, nucleic acid chemistry, hybridization techniques and biochemistry). Standard techniques are used for molecular, genetic, and biochemical methods (see generally, Sambrook et al., Molecular Cloning: A Laboratory Manual, 4th ed. (2012) Cold Spring Harbor Laboratory Press, Cold Spring Harbor, N.Y. and Ausubel et al., Short Protocols in Molecular Biology (2002) 5th Ed, John Wiley & Sons, Inc.) and chemical methods.

In the work on which the present specification is based, the inventors set out to unambiguously establish the binding affinity order and provide the correct surface chemistry for optimal application in nanomedicine. The inventors chose $HfO_2$ NCs as their model system for two reasons: (1) it is a relevant material in nanomedicine, and (2) it is compatible with solution Nuclear Magnetic Resonance (NMR) spectroscopy. The latter has proven to be a very powerful tool to study nanocrystal surface chemistry. Unfortunately, iron oxide NCs interfere with magnetic fields and cannot be studied in NMR. $HfO_2$ NCs are thus an ideal starting point, also because their surface chemistry has already been extensively studied in nonpolar solvents using NMR spectroscopy. First, the inventors evaluated the ligand exchange of the native carboxylic acid ligands for phosphonic acid and catechol ligands, using $^{1}H$ and $^{31}P$ NMR spectroscopy. Importantly, they use the same poly(ethyleneglycol) ligand chain for all three binding group, thus ensuring that results can directly be compared. Next, they assess the influence of solvent (methanol vs water) and the pH on ligand binding. Furthermore, the inventors used NMR and Dynamic Light Scattering (DLS) to determine the colloidal stability provided by the different ligand types in aqueous and buffer environments, and directly correlate this to ligand binding dynamics. Finally, the inventors constructed a colloidal stability map, showing which binding group provides colloidal stability in function of pH. This practical guide will help researchers in designing future surface chemistries.

Detailed Description of the Invention

A first aspect of the invention relates to a nanoparticle comprising a nanocrystal core and an organic stabilizer adsorbed to the nanocrystal core, which facilitates the stability of the particle in aqueous solutions at physiological pH.

The nanoparticle is composed of a nanocrystal comprising or essentially consisting of hafnium (IV) oxide ($HfO_2$) having a diameter equal or less than (≤) 15 nm, and a plurality of dispersant molecules attached to the surface of the nanocrystal. The dispersant molecules comprise or essentially consist of

i. a surface adsorption moiety selected from the group comprising a catechol or a gallol, particularly a 1,2-hydroxy-4-nitrophenyl moiety; and

ii. an oligo(ethyleneglycol) moiety.

One non-limiting example of such dispersant molecule is the dopamine-MEEAA adduct (MEEAA is 2-[2-(2-methoxyethoxy)ethoxy]acetic acid):

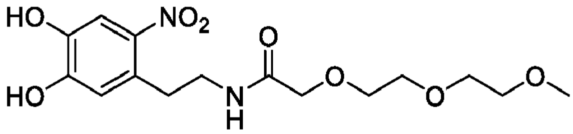

In certain embodiments, the dopamine-oligo(ethylenglycol) dispersant molecules can be described more generally by the general formula

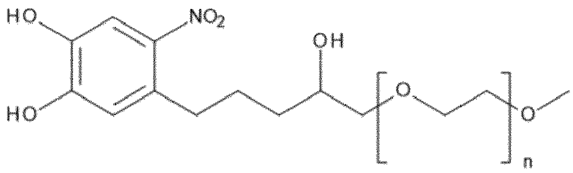

with n being selected from 1, 2, 3, 4, 5, 6.

In certain embodiments, the particle consists of pure hafnium (IV) oxide ($HfO_2$). This is chemically the most easily accessible nanocrystal. It is however conceivable that the $HfO_2$ is only part of the particle; for example, Hf metal might constitute the core and oxide the surface of the particle. A higher content of Hf metal is expected to provide even higher contrast.

In certain embodiments, the nanocrystal has a diameter of ≤ 6nm. In particular embodiments, the diameter is ≤ 4nm. In more particular embodiments, wherein the diameter is ≤3,5 nm. The smaller the diameter, the higher the likelihood that the particles will easily diffuse in the body, and will be subject to renal clearance.

In certain embodiments, the nanocrystal has a diameter of ≤ 15nm.The inventors estimate that particles up to about 15 nm in diameter provide the advantages of the invention in use as a CT contrast agent; the stability of the material depends on the length of the dispersant oligo (ethyleneglycol) chain. If the chain is longer, also larger particles can be stabilized.

In certain embodiments, the nanocrystal is characterized by an aspect ratio of 0.5 to 0.9. The particles obtained by the inventors had approximately a rice grain shape. Uniformly shaped particles are expected to be physiologically more acceptable.

In certain embodiments, the dispersant molecule has a molecular mass of ≤500 g/mol. In certain particular embodiments, the dispersant molecule has a molecular mass of ≤400 g/mol.

In certain particular embodiments, the dispersant molecule comprises, particularly consists of,

i. a surface adsorption moiety selected from nitrodopamine, nitroDOPA, DOPA, dopamine, mimosine and

ii. an $(CH_2\text{-}CH_2\text{-}O)_nCH_3$ moiety, with n being an integer selected from 2, 3, 4 and 5.

In certain particular embodiments, the dispersant molecule is described by a general formula

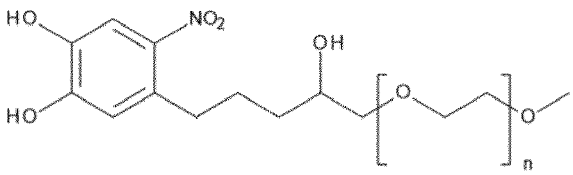

with n being selected from 1, 2, 3, 4, 5, 6.

In certain embodiments, the dispersant is

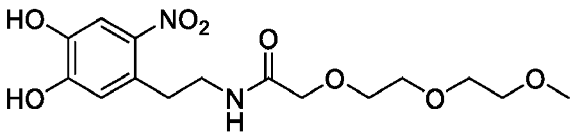

Alternatives to the oligoethylene glycol moiety used herein include, but are not limited to, oligoglycerol and

oligooxazoline chains.

In certain particular embodiments, the density of dispersant molecules on the nanocrystal is 0.5-5 per $nm^2$.

In certain particular embodiments, the nanoparticle comprises a dye molecule for optical localisation.

Another aspect of the invention relates to a composition comprising a plurality of nanoparticles according to the aspect and embodiments discussed above. In certain embodiments, the composition is a stable aqueous colloidal suspension.

In certain embodiments, the composition has a pH from pH 6 to pH 10. In certain particular embodiments, the composition has a pH ranging from pH 6.5 to pH 8.0. This is, to the knowledge of the inventors, the first time such ultrasmall $HfO_2$ particles have been provided in stable aqueous solution at physiological pH.

In certain embodiments, the composition is stable at neutral or basic pH values, particularly between pH 6 and pH 8.

In certain embodiments, 80% of the nanoparticles have a diameter between 2.0 nm and 5.0 nm. In certain particular embodiments, 85% of the nanoparticles have a diameter between 2.5 nm and 4.5 nm.

The compositions can be described, in respect of their size inhomogeneity, by size dispersion or the sigma used to fit the distribution to a Gaussian distribution. Exemplary parameters include, but are not limited to: Mean diameter= 2.6 nm; Sigma= 0.2 nm; size dispersion = 7.7%.

The compositions can be described by their zeta potential. The zeta potential is a function of the pH; the inventors found that for the revelant pH range it is always negative.

Another aspect of the invention relates to the composition according to the invention, in any of its aspects or embodiments, for use in medicine. Several uses for $HfO_2$ particles have been described, prominently the use as a radiotherapy enhancing agent (radiosensitizer) (Maggiorella et al., Future Oncol. 2012 Sep;8(9):1167-81) and the use as a computed tomography (CT) contrast agent (McGinnity, Nanoscale, 2016,8, 13627-13637).

Yet another aspect of the invention relates to a method to manufacture a composition according to the invention. This method comprises the steps of:

a. providing a suspension of hafnium (IV) oxide ($HfO_2$) nanocrystals stabilized by a carboxylic acid ligand in aqueous medium;

b. adding to the suspension an alkaline solution of a dispersant molecule, wherein the dispersant molecule as described herein is composed of

i. a surface adsorption moiety having two aromatic OH hydroxide functions at neutral pH, the surface adsorption moiety being selected from the group comprising a catechol or a gallol, particularly a 1,2-hydroxy-4-nitrophenyl moiety; and

ii. an oligo(ethyleneglycol) moiety.

The pH of the alkaline solution of the dispersant molecule is chosen such that both aromatic hydroxide functions are deprotonated in the alkaline solution.

c. Subsequently, the pH of the suspension is adjusted to physiological pH and

d. optionally, the composition is separated or isolated. Particularly useful protocols for separation include size exclusion / spin filtration.

e. Another optional step includes sonication to resuspend agglomerates.

One carboxylic acid useful as a stabilizer in the first step of the method is MEEAA. This ligand binds poorly but good enough to disperse the particles in water initially.

In one example, the spin filtration step proceeds as follows: An NC suspension containing maximum 50 mg material dissolved in 2 ml solvent is transferred to a pre-rinsed Sartorius Vivaspin (30000 MWCO) spin-filtration tube via a 0.2 μm syringe filter. The suspension is diluted to a volume of 20 ml with Milli-Q water, the solution was then allowed to spin in a centrifuge for 30 mins at 2100 rcf. A minimum of 2 spin filtration cycles using Milli-Q water were performed until the filtrate was colorless. The concentrate was collected, evaporated and suspended in H2O, 30 minutes of sonication was performed to ensure that all agglomerates were resuspended and to minimize insoluble.

*Medical treatment*

Similarly, within the scope of the present invention is a method or treating a condition susceptible to radiotherapy,

particularly cancer, in a patient in need thereof, comprising administering to the patient a composition according to the above description.

*Pharmaceutical Compositions, Administration/Dosage Forms and Salts*

According to one aspect of the compound according to the invention, the nanoparticle or nanoparticle suspension according to the invention is provided as a pharmaceutical composition, pharmaceutical administration form, or pharmaceutical dosage form.

In certain embodiments of the invention, the nanoparticle or nanoparticle suspension of the present invention is typically formulated into pharmaceutical dosage forms to provide an easily controllable dosage of the drug and to give the patient an elegant and easily handleable product.

Similarly, a dosage form for the prevention or treatment of cancer is provided, comprising a nanoparticle or nanoparticle suspension according to any of the above aspects or embodiments of the invention.

The invention further encompasses a pharmaceutical composition comprising a nanoparticle or nanoparticle suspension of the present invention, and a pharmaceutically acceptable carrier. In further embodiments, the composition comprises at least two pharmaceutically acceptable carriers, such as those described herein.

Certain embodiments of the invention relate to a dosage form for parenteral administration, such as subcutaneous, intravenous, intrahepatic or intramuscular injection forms. Optionally, a pharmaceutically acceptable carrier and/or excipient may be present.

The dosage regimen for the compounds of the present invention will vary depending upon known factors, such as the pharmacodynamic characteristics of the particular agent and its mode and route of administration; the species, age, sex, health, medical condition, and weight of the recipient; the nature and extent of the symptoms; the kind of concurrent treatment; the frequency of treatment; the route of administration, the renal and hepatic function of the patient, and the effect desired. In certain embodiments, the compounds of the invention may be administered in a single daily dose, or the total daily dosage may be administered in divided doses of two, three, or four times daily.

*Method of Manufacture and Method of Treatment according to the invention*

The invention further encompasses, as an additional aspect, the use of a nanoparticle or nanoparticle suspension as identified herein, as specified in detail above, for use in a method of manufacture of a medicament. In particular embodiments, the medicament is provided for the radiotherapy, particularly in cancer, or as a contrast agent.

Wherever alternatives for single separable features are laid out herein as "embodiments", it is to be understood that such alternatives may be combined freely to form discrete embodiments of the invention disclosed herein.

The invention is further illustrated by the following examples and figures, from which further embodiments and advantages can be drawn. These examples are meant to illustrate the invention but not to limit its scope.

*Description of the Figures*

Fig. 1 shows (A) Solvothermal synthesis of $HfO_2$ nanocrystals starting from 1 equivalent $Hf(O\text{-}tBu)_4$ and 88 equivalents benzyl alcohol. (B) (Diffusion filtered) 1H NMR spectra of MEEAA functionalized $HfO_2$ NCs in different solvents. The $\alpha$ and $\beta$ resonances belong to the residual hydroxyl and methyl groups of methanol, respectively. (C) Transmission Electron Microscopy (TEM) images and data for the synthesized $HfO_2$ NCs. The NC diameter of the quasi-spherical NCs was calculated after measuring the surface area of at least 150 NCs and calculated the diameter as if it was a circle. Average: $2.64 \pm 0.19$ nm. A size distribution histogram and a zoomed-in image of a singular NC can be seen respectively in the bottom left and the top right corner.

Fig. 2 shows (A) Ligand exchange performed between MEEAA functionalized NCs and PA-PEG. (B) $^{1}H$ NMR reference spectra in MeOD of the free ligands as reference and the stepwise titration of MEEAA functionalized NCs with PA-PEG, equivalents are with respect to the total amount of MEEAA present. The resonance * is an unidentified impurity. (C) $^{31}P$ NMR spectra (4096 scans) in MeOD for the stepwise titration of MEEAA functionalized NCs with PA-PEG, broadened signals are indicative of NC binding. (D) Diffusion filtered $^{1}H$ NMR spectra of MEEAA functionalized NCs in MeOD after addition of 1.3 equivalents of PA-PEG. Signals arising from bound MEEAA are denoted in red, signals arising from PA-PEG are denoted in striped blue. $C_{NC}$ = 1210 $\mu mol.L^{-1}$, corresponding to 34 mg NCs of this size in 0.5 ml MeOD.

Fig. 3 shows a diffusion filtered $^{1}H$ NMR spectrum of the NC suspension in MeOD at 1.6 equivalents PA-hex-PEG added.

Fig. 4 shows (A) and (B) $^{31}P$ NMR spectra of PA-PEG and PA-hex-PEG functionalized NCs at different $D_2O$ volume

%. (C) Free ligand fraction for PA-PEG and PA-hex-PEG at different $D_2O$ volume %, determined by peak deconvolution.

Fig. 5 (A) Ligand exchange performed between MEEAA functionalized NCs and nitrodopamine-mPEG. (B) $^1H$ NMR spectra before and after the ligand exchange titration performed in $D_2O$ with nitrodopamine-mPEG. 1.5 equivalents of nitrodopamine-mPEG were added and the pH was kept above 5 at all times during addition, the purified nitrodopamine functionalized NC spectrum was measured at pH = 7.4. $C_{NC}$ = 128 $\mu$mol.L$^{-1}$, corresponding to 14.4 mg NCs of this size in 2 ml $D_2O$.

Fig. 6 Effect of pH on ligand binding and stability in water for purified NCs functionalized with PA-PEG, PA-hex-PEG and Nitrodopamine-mPEG . (A) Bound and unbound ligand fraction in $D_2O$ based on NMR peak deconvolution at different pH values. (B) Z-average value of NCs in DLS at different pH values. (C) Zeta potential of the NCs at different pH values. All measurements were performed at constant ionic strength (0.01 mol.L$^{-1}$ NaCl) at 25°C.

Fig. 7 Stability of functionalized NCs in different concentrations of phosphate buffered saline (PBS) at pH 7.4 and 25°C. (A) Colloidal stability of functionalized nanocrystals measured using DLS z-average values at different PBS concentrations. (B) Stability of functionalized NCs in 2× PBS over time at pH 7.4 and 25°C.

Fig. 8 Colloidal stability map for metal oxide nanocrystals functionalized with carboxylic acids, phosphonic acids and catechols. In this concrete example, we used $HfO_2$ as NC model system with its respective iso-electric point (IEP), MEEAA as carboxylic acid, PA-PEG as phosphonic acid and nitrodopamine-mPEG as catechol. A green color on the map correlates to good colloidal stability, the areas where a gradient transition to red is made shows reduced colloidal stability, red shaded areas indicate bad colloidal stability.

Fig. 9 UV-VIS spectra of purified nitrodopamine-mPEG functionalized NCs at different pH values in $H_2O$.

## Examples

### *Example 1: The $HfO_2$-MEEAA model system.*

We synthesized $HfO_2$ nanocrystals (NCs) from hafnium *tert*-butoxide and benzyl alcohol at 220 °C via an established solvothermal process (Lauria et al. ACS Nano 2013, 7 (8), 7041-7052) (Fig 1A). The $HfO_2$ surface was functionalized with 2-[2-(2-methoxyethoxy)ethoxy]acetic acid (MEEAA, see Fig. 1B) to stabilize the nanocrystals in toluene and all unbound ligands were removed as described previously (De Roo et al. Chem Mater 2018, 30 (15), 5485-5492). The nanocrystals have a diameter of 2.64 ± 0.19 nm ($\mu \pm \sigma$) according to TEM (Fig. 1C) and possess the monoclinic crystal structure according to x-ray scattering analysis (data not shown). The $^1H$ NMR spectrum of the nanocrystal dispersion in toluene-$d_8$ only shows broadened resonances, assigned to bound ligands (Fig. 1B). Indeed, spectral broadening is a typical attribute of bound ligands due to both homogeneous broadening ($T_2$ relaxation) and heterogeneous broadening (imperfect solvation of the ligand shell; see de Roo, ibid.).

The nanocrystals can also be dispersed in ethanol, methanol and water, and are thus an ideal starting point for our investigation into ligand binding behaviour in polar solvents. In methanol-$d_4$ (MeOD) the $^1H$ NMR spectrum looks markedly different with sharp signals superimposed on the broad resonances (Fig. 1B). We assign the sharp signals to auto-desorbed ligands, corroborated by the appearance of two sets of resonances in Diffusion Ordered Spectroscopy (DOSY). DOSY allows to separate (overlapping) NMR resonances according to their diffusion coefficient and thus separates the free ligand (quickly diffusing) from ligands bounds to NCs (slowly diffusing). We can selectively observe the bound ligands in a diffusion filtered spectrum (Fig. 1B), and upon close inspection, one observes that the bound MEEAA resonances in methanol-$d_4$ are slightly sharper than the ones in toluene-$d_8$ indicating a better solvation of the ligand shell in methanol. Given that all ligands were bound in toluene, we infer that the solvent clearly plays a role in the adsorption-desorption equilibrium, for instance by changing the solubility of the ligand. Indeed, even more MEEAA ligands desorb in $D_2O$, but the nanocrystals remain stable in the pH range 2-6. The NCs quickly precipitate at pH > 6 and therefore MEEAA is not a suitable ligand for many biomedical applications, which typically require stability at physiological conditions (pH = 7.4).

Note that aside from the main MEEAA signals, we also observed broad resonances with low intensity in the aromatic region of the $^1H$ spectrum, assigned to benzoate ligands. Benzoic acid was previously identified as a side-product of the nanocrystal synthesis and found adsorbed on the nanocrystal surface. Functionalization of the surface with MEEAA after synthesis clearly did not remove all benzoate from the surface and a small fraction remains present.

*Example 2: Competitive binding of phosphonic acids*

To evaluate the binding strength of phosphonic acids in methanol, we chose (2-(2-(2-hydroxyethoxy)ethoxy)ethyl)phosphonic acid (PA-PEG) as a ligand with comparable structure to MEEAA, (Fig. 2A). In the $^1$H NMR spectrum, resonance **1** of PA-PEG has a chemical shift of 2.05 ppm, clearly separated from the MEEAA resonances, allowing us to selectively monitor the binding of PA-PEG (Fig. 2B). Since MEEAA has a methoxy group and PA-PEG has not, resonance **f** is used to gain selective information about the binding of MEEAA. The other resonances **(2-6** and **b-e)** overlap.

Starting from MEEAA stabilized $HfO_2$ nanocrystals in methanol-$d_4$, we add PA-PEG in steps while monitoring the $^1$H NMR spectrum, see Fig. 1B. During the titration, we observe the gradual appearance of a broad resonance around 2.2 ppm, assigned to resonance **1** of bound PA-PEG. Concomitantly, resonance **f** becomes more narrow (Fig. 2B), indicating the removal of MEEAA from the nanocrystal surface. Within the aromatic region we also observe desorption of benzoic acid. We conclude that PA-PEG is effectively displacing MEEAA and benzoic acid. Given the absence of free phosphonic acid, the exchange is quantitative for most of the titration. After addition of 1.3 equivalent of phosphonic acid, sharp signals appear in the same region, indicating that there is now free PA-PEG present. The same conclusions are drawn from the $^{31}$P spectra as well (Fig. 2C), where first a broad signal grows in intensity and a sharp $^{31}$P signal appears after adding more than one equivalent. Interestingly, the bound PA-PEG resonance still increases slightly in intensity between 1.3 and 1.6 equivalents. We infer that the last part of the exchange does not proceed quantitatively and the remaining carboxylate ligands are more difficult to remove. This observation implies that the binding affinity ($\Delta G_{ads}$) is not a single, fixed quantity for all the MEEAA ligands, but rather a distribution, as has been previously shown for CdSe nanocrystals.

Unfortunately, the NMR spectra feature a lot of spectral overlap, with superimposed signals of free and bound ligands. At the end of the titration, the resonances of free ligands dominate the spectrum. To gain more insight in the composition of the ligand shell at that point, we turn to the diffusion filtered spectrum (Fig. 2D.). While resonances **2 - 6** overlap with resonances **b** - **e,** the clear presence of resonance **f** indicates the presence of residual MEEAA on the surface. Based on the diffusion filtered profile of bound MEEAA, we assigned the part of the spectrum belonging to MEEAA as the red shaded area. The blue patterned area is assigned to PA-PEG. The ratio of the areas gives us a rough estimate of the ligand shell composition: 10 % MEEAA and 90 % PA-PEG, but this estimation ignores differences in relaxation behaviour of the different resonances. There is also still benzoate present on the surface according to the regular $^1$H spectrum but the signal-to-noise of these resonances was too low in the diffusion filtered spectrum due to their faster $T_2$ relaxation (because of rigidity and proximity to the surface). The above results thus confirm that the exchange between the carboxylate ligands and PA-PEG does not go to completion in methanol. This conclusion stands in contrast to the relative binding affinities of fatty acids and alkylphosphonic acids in nonpolar solvents, were phosphonic acids quantitatively replace carboxylic acids in a 1:1 stoichiometry.

The auto-desorption of MEEAA in methanol already indicates that the ligand solubility can change the binding affinity. Indeed, ligand binding is an equilibrium process, governed by the chemical potential of each species:

$$NC(*) + L \rightleftharpoons NC(L) \qquad \textbf{Eq. 1}$$

Therefore, this adsorption-desorption equilibrium is dependent on the chemical potential of the free ligand (and thus the solubility). To explore this concept in practice, we designed a ligand shell architecture that would mimic a micelle; having both a hydrophobic and a hydrophilic segment. To this end we chose the ligand (6-{2-[2-(2-hydroxyethoxy)-ethoxy]-ethoxy}-hexyl)phosphonic acid (PA-hex-PEG), see Fig. 3. We hypothesized that this ligand would more readily self-assemble on the nanocrystal surface since the hydrophobic region decreases the solubility in polar solvents. Using PA-hex-PEG, we performed the same titration experiment as before. The results are generally quite similar showing the exchange of carboxylate ligands for PA-hex-PEG (not shown). However, this time, most benzoate ligands are removed by PA-hex-PEG (although not completely) and hardly any MEEAA resonances are detectable in the diffusion filtered spectrum (Fig. 3). At most 3 % of MEEAA is still present in the ligand shell. We conclude that indeed; the competitive binding can be manipulated by changing the ligand solubility. Interestingly, benzoic acid appears to have a higher binding affinity than MEEAA which could be ascribed to both its higher acidity and its lower solubility in methanol.

*Example 3: Purification and transfer to water of phosphonate capped nanocrvstals.*

With our final goal in mind of providing a stable surface chemistry for biomedical applications, we sought to purify our dispersions and disperse them in aqueous media. Precipitation-redispersion cycles are the most common way of purifying nanocrystals. However, the great versatility of the ethylene glycol segment provides colloidal stability in a broad range of solvents and non-solvents like hexane do not mix well with methanol. Therefore, we choose to purify

our dispersion using spin filtration, a form of ultrafiltration. The technique is based on semipermeable membranes (like dialysis) where small molecules can pass through the pores but large nanocrystals cannot. By performing the separation in a centrifuge, purification is expedited. First the nanocrystal suspension is placed in the spin filter and further diluted with pure methanol. Dilution does not induce ligand desorption. After filtration, a concentrated dispersion of nanocrystals is retrieved. The purification is successful as shown by the removal of almost all unbound species after 3 purification cycles. A comparison of the diffusion filtered spectra before and after spin filtration show a perfect match, proving that the purification did not change the ligand shell composition. Interesting differences between PA-PEG and PA-hex-PEG were observed when gradually changing the solvent composition from pure methanol-*d*$_4$ to $D_2O$ (Fig. 4). Whereas PA-PEG gradually desorbs from the surface when increasing water content, PA-hex-PEG remains tightly bound. This further underscores our hypothesis that PA-hex-PEG behaves as a micelle mimic, avoiding contact of the hydrophobic segment with water. By binding the nanocrystal surface the PA-hex-PEG ligand creates a hydrophobic inner shell with alkyl-alkyl interactions and a hydrophilic outer shell with ethylene glycol moieties as hydrogen bond acceptor for water molecules. PA-PEG on the other hand is highly water soluble and thus the affinity for the hafnium oxide surface decreases upon increasing the water content.

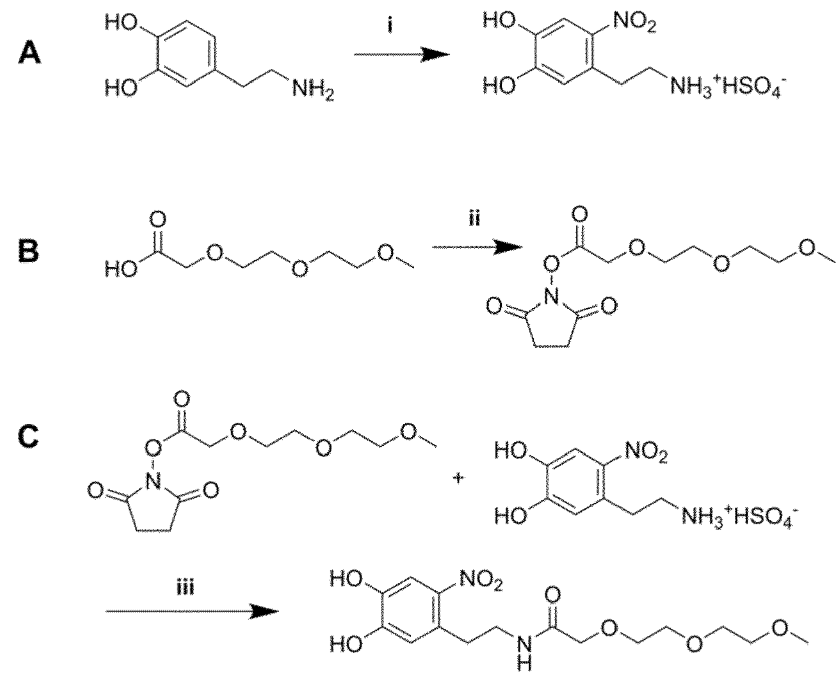


**Scheme 1.** (A) Synthesis of nitrodopamine hemisulfate. (B) Synthesis of MEEAA-NHS. (C) Synthesis of nitrodopamine-mPEG. Reagents and conditions: (i) $NaNO_2$, 20% $H_2SO_4$, $H_2O$, 0°C to RT, 12h, 50%; (ii) NHS, DCC, DMAP, dry THF, 0°C to RT, 12h, 83%; (iii) NMM, dry DMF, RT, 48h, 75%.

<u>*Example: Synthesis and binding of catechols.*</u>

We synthesized N-(4,5-dihydroxy-2-nitrophenethyl)-2-(2-(2-methoxyethoxy)ethoxy)acetamide (nitrodopamine-mPEG), see Scheme 1. We opted for a nitrocatechol instead of an unsubstituted catechol since the nitro group decreases the catechol pKa values, and improves the oxidative stability of the catechol. Starting from dopamine hydrochloride, a one-step nitration reaction results in the formation of nitrodopamine hemisulfate. Separately, MEEAA was converted in an activated N-hydroxysuccinimide ester (MEEAA-NHS) using N,N'-dicyclohexylcarbodi-imide (DCC), N-hydroxysuccinimide (NHS) and 4-Dimethylaminopyridine (DMAP). The coupling between nitrodopamine hemisulfate and MEEAA-NHS was performed using N-Methylmorpholine (NMM) acting as non-nucleophilic base. The final nitrodopamine-mPEG ligand was purified using preparative HPCL and fully characterized with ESI-HRMS and NMR spectroscopy.

When we performed a similar competitive binding experiment as before (addition of nitrodopamine-mPEG to MEEAA capped $HfO_2$ nanocrystals in methanol-*d*$_4$), we found that one equivalent of nitrodopamine-mPEG was unable

to effectively compete for the nanocrystal surface, even at merely 0.4 equivalents of catechol, freely diffusing nitrodopamine-mPEG signals could be observed. Such a low binding affinity was highly unexpected, given many reports of successful surface functionalization with catechols (Okada et al. ChemistrySelect 2018, 3 (29), 8458-8461; Dragomanet al. Chemistry of Materials 2017, 29 (21), 9416-9428; Amstadet al. The Journal of Physical Chemistry C 2011, 115 (3), 683-691; Amstad et al., Nano Letters 2009, 9 (12), 4042-4048; Gillichet al. Journal of the American Chemical Society 2011, 133 (28), 10940-10950; Xie et al. Adv. Mater. 2007, 19 (20), 3163-3166.; Bae et al. Bioconjugate Chemistry 2010, 21 (3), 505-512.). However, in these reports water or biological buffers were used as the solvent. Therefore, we designed a competitive binding experiment directly in water. Fortunately, MEEAA stabilized $HfO_2$ nanocrystals are stable in $D_2O$, even though a significant portion of MEEAA is desorbed. The addition of one equivalent nitrodopamine-mPEG, without adjusting the pH, results in a turbid suspension with pH = 2. When the pH is adjusted to pH = 5, a stable suspension is obtained. To allow for a systematic, gradual addition of nitrodopamine-mPEG we prepared a stock solution of nitrodopamine-mPEG with 2 equivalents of NaOD to doubly deprotonate the catechol. Addition of the base changes the color of the solution from light yellow to a deep burgundy. We added this stock solution to a suspension of MEEAA stabilized $HfO_2$, in steps of 0.5 equivalents and recorded both standard $^1H$ NMR and diffusion filtered NMR spectra. After addition of 0.5 equivalents, we do not observe any sharp signals belonging to nitrodopamine-mPEG, while we do observe desorbed benzoic acid and desorbed MEEAA. In the diffusion filtered spectrum, we also see a clear change. In the aromatic region, the broad signals of benzoate are replaced by the broad signals of nitrodopamine-mPEG. The peak shape of the region 3-4 ppm is also altered. The exchange continues as more nitrodopamine-mPEG is added and upon addition of 1.5 equivalents, sharp (unbound) nitrodopamine-mPEG signals are detected. The suspension remains stable despite the pH being 10.3 at this point in the titration, providing further evidence that the ligand exchange was successful since MEEAA stabilized nanocrystals would precipitate at pH > 6. We conclude that nitrodopamine-mPEG can quantitatively displace MEEAA from the nanocrystal surface if the pH > 5.

The NCs were again purified using multiple cycles of spin filtration, using Milli-Q water as solvent, until the filtrate was nearly colorless. The concentrate was evaporated and redispersed in $D_2O$, and the pH was adjusted to 7.4. Fig. 5B contains a regular $^1H$ NMR spectrum of the purified suspension, the purity of the sample is striking and only broadened resonances pertaining to nitrodopamine-mPEG are observed. Based on quantitative $^1H$ NMR and a TGA mass loss of 25.79% we calculate a nitrodopamine-mPEG ligand density of 1.53 $nm^{-2}$ at the nanocrystal surface. We conclude that nitrodopamine-mPEG forms a tightly bound ligand shell on the nanocrystals at physiological pH with no signs of desorption.

*pH-dependence of ligand binding.*

Since it is obvious that pH plays a crucial role in ligand binding in aqueous environments, we systematically varied the pH from 3 to 10 and used $^1H$ NMR, $^{31}P$ NMR and Dynamic Light Scattering (DLS) to assess the ligand binding and colloidal stability (Fig. 6). From NMR, we extract the bound ligand fraction for the phosphonic acid ligands via peak deconvolution of the $^{31}P$ resonances and for nitrodopamine-mPEG via peak deconvolution of the aromatic $^1H$ resonances. From DLS measurements we obtained the Z-average value and the zeta potential. The Z-average value is a single value describing the average particle size and is most sensitive to agglomeration. The zeta potential indicates the degree of electrostatic repulsion between the nanocrystals (zeta potential values above +25 mV or below -25 mV indicate stable suspensions). From Fig. 6, we clearly observe that the bound ligand fraction decreases with rising pH for both PA-PEG and PA-hex-PEG. Taking the pKa values of ethyl phosphonic acid ($pKa_1$ = 2.43 ; $pKa_2$ = 8.05) as reference, it is striking that the bound ligand fraction decreases most steeply around $pKa_2$. We infer that the second deprotonation of the phosphonic acid causes ligand-ligand repulsion in the ligand shell and increases the solubility of the ligand in water. Both effects lead to a reduced bound ligand fraction. Not surprisingly, the loss of ligands has a detrimental effect on the colloidal stability and the Z-average increases significantly for pH > pKa2. Overall, PA-hex-PEG performs slightly better than PA-PEG but the difference is small. Most likely the double anionic phosphonate compensates for the short hydrophobic segment.

One might expect complete loss of colloidal stability upon ligand desorption. However, no visual turbidity was observed in the samples and the Z-average remains below 100 nm. Note that the zeta potential drops below -25 mV at pH > 8. While steric stabilization is lost with progressing ligand desorption, electrostatic stabilization takes over, preventing the NCs from fully destabilizing. The negative charge could originate from residual bound, double deprotonated phosphonates, or more likely from hydroxide adsorption on the nanocrystal surface. Indeed, in water, there are multiple adsorption-desorption equilibria present simultaneously.

$$NC(*) + L^- \rightleftharpoons NC(L)^- \qquad \textbf{Eq. 2}$$

$$NC(*) + H^+ \rightleftharpoons NC(H)^+ \qquad \textbf{Eq. 3}$$

$$NC(*) + OH^- \rightleftharpoons NC(OH)^- \qquad \textbf{Eq. 4}$$

Add also the acid-base equilibria and one starts to appreciate the complex pH dependence of the system.

According to Fig. 6, the phosphonic acids keep the nanocrystals stable between pH 3 and 8 in a *static* system. However, in a dynamic biological environment (e.g. a blood vessel), many competing ligands are present and desorbed ligands are quickly removed. The equilibrium will adjust and thus ligands will continuously desorb from the surface, eventually causing loss of colloidal stability. Despite an acceptable Z-average value at physiological pH, this dynamic behaviour could explain why single phosphonate ligands are not necessarily successful at fully preventing aggregation in physiological media.

Interestingly, nitrodopamine-mPEG has almost the complete opposite behaviour, unable to provide stable colloidal dispersions under acidic conditions with a very sharp transition around pH = 5. This is evidenced by the steep increase in the Z-average (Fig. 6). Between pH 5 and 10, all nitrodopamine-mPEG ligands remain bound and only at pH = 11, there is a slight decrease in the bound fraction from 100% to 97%. This translates in an excellent colloidal stability in pH range 5 - 11. We conclude that for aqueous applications at physiological pH, nitrodopamine-mPEG outperforms both PA-PEG and PA-hex-PEG. For aqueous applications at acidic pH on the other hand the phosphonic acid ligands are better suited. To test if there would also be a temperature dependence on the binding dynamics of the functionalized NC systems, we performed variable temperature NMR measurements in $D_2O$ at pH 7.4 between 25°C and 60°C. $^1H$ NMR spectra showed no change in ligand adsorption/desorption equilibria for both phosphonic acids and nitrodopamine-mPEG, leading us to tentatively conclude that the results from the pH titrations would also translate to physiological temperature.

To illustrate the complementary behaviour of phosphonic acids and catechols, we performed a competitive exchange reaction on purified nitrodopamine-mPEG NCs in $D_2O$. 1 eq of PA-PEG was added, compared to the original amount added to functionalize the NCs with nitrodopamine-mPEG, and NMR measurements were performed at different pH values. The results clearly show that at acidic pH values a partial exchange with PA-PEG occurs, evidenced by the appearance of sharp nitrodopamine-mPEG signals in the aromatic region and methylene triplet around 3 ppm. The nitrodopamine-mPEG NC suspension, which normally would fully destabilize below pH 5, remained colloidally stable at pH 2.22 due to the now mixed catechol-phosphonate ligand shell. The exchange equilibrium mostly shifts back towards nitrodopamine-mPEG as the pH moves towards neutral and basic values.

*Stability in phosphate buffered saline (PBS).*

Finally, we assessed the stability of NCs functionalized with PA-PEG, PA-hex-PEG and nitrodopamine-mPEG in phosphate buffered saline (PBS). Stability in PBS is an important prerequisite for biomedical applications, since many *in vivo* experiments inject the desired drug or contrast agent in saline solution or in PBS. A 1× PBS buffer contains 137 mmol $L^{-1}$ NaCl, 2.7 mmol.$L^{-1}$ KCl, 10 mmol.$L^{-1}$ $Na_2HPO_4$ and 1.8 mmol.$L^{-1}$ $KH_2PO_4$, and is the standard concentration. When the concentrations are half or double, these buffers are referred to as 0.5× PBS and 2× PBS respectively. It is clear that PBS contains relatively high salt concentrations and phosphate ions (which will compete for the surface) and thus provides a real test for the stability of our functionalized nanocrystals. First, we varied the PBS concentration and immediately measured the Z-average via DLS (Fig 7A). Up to 1.5× PBS, all ligands keep the nanocrystals colloidally stable. As expected, PA-PEG is the weakest ligand and cannot prevent the start of nanocrystal aggregation in 2× PBS solutions. Second, the stability of all functionalized NCs was monitored over time in 2× PBS (Fig. 7B). Clearly, PA-PEG functionalized nanocrystals agglomerate quickly and visually precipitate after several hours. The colloidal stability of PA-hex-PEG functionalized nanocrystals steadily decreases over 24 hours, before completely agglomerating. Only nitrodopamine-mPEG functionalized nanocrystals remain completely stable. There is no sign of aggregation over the course of 48 hours and the suspension also remains visually clear for at least 1 month.

*Discussion*

The above results make clear that surface chemistry become much more complex when moving from nonpolar to polar (e.g., aqueous) solvents. In nonpolar solvents, charged ligands or nanocrystals are thermodynamically unstable, leading to a limited set of binding motifs and clear ligand exchange rules. For example, auto-desorption of oleate (deprotonated oleic acid) does not occur in toluene. For the binding motif of $PbS(PbX_2)$, removal of the entire Lewis acid $PbX_2$ has been observed in chloroform or coordinating solvents like THF. Likewise, for $HfO_2(H,OOCR)$, desorption of oleic acid is possible by recombination of the carboxylate and proton. However, these restrictions disappear in polar

solvents where charges are stabilized, and the proton and carboxylate have independent adsorption/desorption equilibria, see also Equations 2-4.

From the above data, we constructed a colloidal stability map, indicating which ligands provide colloidal stability in specific pH ranges, see Fig. 8. It is interesting to correlate this stability map to the pKa's of the ligands. We take the pKa values of ethyl phosphonic acid ($pKa_1$ = 2.43 ; $pKa_2$ = 8.05) as reference for the PA-PEG and PA-hex-PEG ligands. At pH = 3 (where the particles are stable), we calculate that the 96% of the phosphonic acid is mono-deprotonated. One can assume that the phosphonate will bind in this form to the nanocrystal surface. At pH > 8 (above $pKa_2$), the bound ligand fraction decreases quickly and the particles start to aggregate (Fig. 6). The double deprotonation has two consequences; (1) the ligand becomes more soluble in water, and (2) there appears electrostatic ligand-ligand repulsion, instead of the stabilizing hydrogen bonding. Both effects promote ligand desorption. In addition, the iso-electric point of hafnia occurs at pH = 8, rendering the surface negatively charged at pH > 8, thus further decreasing the binding affinity of the negatively charged phosphonate ligand.

A similar reasoning applies to the case of nitrodopamine-mPEG ($pKa_1$ = 6.6 ; $pKa_2$ = 11 ; based on nitrodopamine pKa values). At pH = 5 (where the particles are unstable), we calculate that approximately 98% of the ligand is fully protonated, and can thus only interact with the surface via weak hydrogen bonds. Above pH 5, more nitrodopamine-mPEG becomes mono-deprotonated and is able to coordinate to the surface metal sites and providess an additional hydrogen bond to further stabilize the bound state. This is confirmed by comparing the UV-VIS spectra of nitrodopamine-mPEG bound to $HfO_2$ NCs with the reference spectra of the free ligand, see Fig. 9. For 5 < pH < 11, we find the mono-deprotonated species. At pH > 11, we see again the appearance of free ligands in NMR (Figure S16) and the double deprotonated species in UV-Vis. For the reasons mentioned above, the double deprotonated species has a low binding affinity for the surface. Finally, carboxylic acids can only be mono-deprotonated and we observe that MEEAA (pKa = 3.4) keeps the NCs stable until pH = 6. We hypothesize that they are less stable than phosphonates and catechols due to the lack of ligand-ligand hydrogen bonding.

The stability experiments in buffer solution point to two additional variables: competitive ligands and salt. In phosphate buffered saline, a high concentration of phosphate is present, which competes for the surface but does not provide steric stabilization. Since the phosphonic acids (PA-PEG and PA-hex-PEG) desorb at pH = 7.4 (25% desorbed, see Fig. 6), they are in equilibrium and can thus be slowly displaced over time. The nitrodopamine-mPEG is tightly bound (0 % desorbed) and is not being displaced by phosphonic acid, judging from our competition experiments. Hence the high stability of the particles capped with nitrodopamine-mPEG.

The above discussion shows that in aqueous media, surface chemistry is a complex interplay between multiple factors. There is the pH-dependent charge of the surface, the pH-dependent deprotonation of the ligand, and competition by phosphate in buffer solution. Having thus the pKa(s) of the ligands available and the isoelectric point of the nanocrystals, one can now use the colloidal stability map (Fig. 8) to start predicting which ligands will provide colloidal stability at a particular pH.

## *Synthetic Details*

(6-{2-[2-(2-Hydroxy-ethoxy)-ethoxy]-ethoxy}-hexyl)phosphonic acid and (2-(2-(2-hydroxyethoxy)ethoxy)ethyl)phosphonic acid were purchased from SiKÉMIA. N-Hydroxysuccinimide (≥98%) and dopamine hydrochloride (≥99%) were purchased from Acros Organics. 2-[2-(2-Methoxyethoxy)ethoxy]acetic acid (>95.0%) was purchased from TCI Chemicals. Hafnium(IV) tert-butoxide (99.99%), N,N'-Dicyclohexylcarbodiimide (99%), 4-(Dimethylamino)pyridine (≥99%), 4-Methylmorpholine (99%), Sodium nitrite (≥99.0%) and solvents used for synthesis were purchased from Sigma Aldrich. All purchased chemicals were used without further purification. All deuterated solvents were purchased from Sigma Aldrich or Eurisotop.

### *Synthesis of MEEAA-NHS.*

4 mmol (0.7128 g) 2-[2-(2- methoxyethoxy)ethoxy]acetic acid and 4.2 mmol (0.4828 g) N-hydroxysuccinimide were dissolved in 8 ml dry THF in a predried vial and cooled to 0°C. 4.2 mmol (0.866 g) N,N'-Dicyclohexylcarbodiimide was dissolved in a separate pre-dried vial in 4 ml THF and added dropwise to the first mixture by performing an air-free transfer. The mixture was stirred for 15 mins at 0°C, after which 0.2 mmol (0.024 g) catalytic 4-dimethylaminopyridine was added. The mixture was stirred overnight at room temperature, resulting in a white turbid mixture. The turbid solution was transferred to a 50 ml centrifuge tube and centrifuged 5 mins at 5000 rcf, the supernatant was transferred to a flask using a 0.2 μM PTFE syringe filter and the white solid was washed once with 10 ml THF to collect remaining product. After solvent removal using a rotary evaporator the viscous liquid was dissolved in 12 ml DCM, the organic phase was extracted four times with MQ water and two more times with brine. The organic phase was dried over $MgSO_4$ and dried using a rotary evaporator. Product was collected as a colorless viscous liquid with 83% yield.

**$^1$H NMR** (500 MHz, $CDCl_3$): δ 4.5 (s, 2H) δ 3.8-3.76 (m, 2H) δ 3.7-3.66 (m, 2H) δ 3.65-3.6 (m, 2H) δ 3.55-3.51

(m, 2H) δ 3.36 (s, 3H) δ 2.82 (s, 4H). **$^{13}$C NMR** (500 MHz, $CDCl_3$): δ 168.73 (s) δ 166.02 (s) δ 77.24 (s) δ 71.91 (s) δ 71.37 (s) δ 70.607 (s) δ 70.602 (s) δ 66.55 (s) δ 59.06 (s) δ 25.58 (s). **HRMS** 275.26 calc for [M], 292.9 $[M+NH_4]^+$ found.

*Synthesis of Nitrodopamine hemisulfate.*

8.753 mmol (1.66 g) dopamine hydrochloride and 35.219 mmol (2.43 g) $NaNO_2$ were dissolved in 100 ml MQ water and cooled in an ice bath. 8.33 ml of precooled 20% $H_2SO_4$ was added dropwise to the mixture under heavy stirring, during addition the mixture turns turbid yellow with the formation of brown gasses. The mixture was removed from the ice bath and allowed to stir 12h at room temperature. The resulting turbid yellow solution was cooled again in an ice bath, followed by collection of the solid via suction filtration using a por 4 fritted glass filter. Next, the solid was washed 2 times with 50 ml ice cold MQ water, 1 time with 50 ml ice cold absolute ethanol and 2 times with 50 ml ice cold diethyl ether. The yellow powder was collected and dried overnight under vacuum, final yield was 50%.

**$^1$H NMR** (500 MHz, DMSO-d6): δ 7.46 (s, 1H) δ 6.73 (s, 1H) δ 3.12- 2.99 (m, 4H). **$^{13}$C NMR** (500 MHz, DMSO-d6): δ 156.49 (s) δ 145.24 (s) δ 136.31 (s) δ 127.32 (s) δ 111.14 (s) δ 39.15 (s) δ 31.56 (s). **HRMS** 296.25 calc for [M], 197.00 $[M-H_2SO_4-H]^-$ found.

*Synthesis of Nitrodopamine-mPEG.*

1.784 mmol (491 mg) MEEAA-NHS and 2.854 mmol (846 mg) nitrodopamine hemisulfate were dissolved in 25 ml dry DMF in a predried flask, resulting in a dark orange solution. The flask was sealed, flushed with argon and cooled in an ice bath. 785 μL N-methylmorpholine was added dropwise to the mixture using air-free technique, after approximately 10 minutes of stirring the solution becomes turbid. The mixture was allowed to stir 48 hour at room temperature, followed by evaporation overnight under vacuum at 40°C to remove DMF, yielding a dark brown liquid. 40 ml 1M HCl was added to the crude and extracted 3 times with 40 ml $CHCl_3$, a dark brown solid is formed during the process at the liquid interface, care was taken to not allow this to enter the organic phase. The organic phase was extracted twice more with 50 ml brine, dried with $Na_2SO_4$ and evaporated using rotary evaporation. The resulting solid was purified with prep HPLC using a gradient from solvent A (MQ water containing 0.1% TFA) to solvent B (ACN containing 0.1% TFA), after freeze-drying the final product was isolated as a fluffy white-yellow solid with 75% yield.

**$^1$H NMR** (500 MHz, MeOD): δ 7.54 (s, 1H) δ 6.7 (s, 1H) δ 3.93 (s, 2H) δ 3.62(s, 4H) δ 3.61-3.58 (m, 2H) δ 3.57-3.5 (m, 4H) δ 3.35 (s, 3H) δ 3.07 (t, 2H, J = 6.68 Hz). **$^{13}$C NMR** (500 MHz, MeOD): δ 173.05 (s) δ 152.4 (s) δ 145.53 (s) δ 141.06 (s) δ 129.39 (s) δ 119.61 (s) δ 113.56 (s) δ 72.97 (s) δ 72.07 (s) δ 71.4 (s) δ 71.39 (s) δ 71.24 (s) δ 59.21 (s) δ 40.47 (s) δ 34.14 (s). **HRMS** 358.35 calc for [M], 357.35 $[M-H]^-$ found.

*Synthesis of hafnium oxide nanocrystals.*

The NCs were synthesized from hafnium(IV) tert-butoxide (4.8 mmol, 2.26 g, 1.94 mL) and anhydrous benzyl alcohol (40 mL) according to Lauria et al.[1] After synthesis, the nanocrystals were collected by adding diethyl ether (17 mL) to the reaction mixture and centrifugation (5000 rcf, 3 mins) in plastic centrifuge tubes. The sediment was washed three times with diethyl ether (17 mL). For functionalization with 2-(2-(2-methoxyethoxy)ethoxy)acetic acid, the sediment was first dispersed in 17 mL toluene resulting in a milky white turbid liquid. 335 μL 2-(2-(2-methoxyethoxy)ethoxy)acetic acid (0.2885g ; 1.62 mmol) was added followed by 30 mins of sonication, resulting in a transparent suspension with a few insolubles present. The insolubles were removed by centrifugation (5000 rcf, 5 mins) and the clear top layer was transferred to new plastic centrifuge tubes. NCs were sedimented by addition of 1:2 volume hexane (mixture of isomers), after centrifugation (5000 rcf, 5 mins) the organic top phase was removed and the NCs were resuspended in toluene. This purification step was repeated 3 more times before final resuspension in toluene. The purified NC suspension in toluene remains stable for at least 1 year. The dispersion in toluene can be dried and dispersed in ethanol, from ethanol the dispersion can be dried again and resuspended in MeOH or water.

*TEM analysis.*

Transmission electron microscopy (TEM) images (of a drop-cast suspension on a grid) were taken on a JEOL JEM-2200FS TEM with Cs corrector.

*Dynamic light scattering analysis.*

Dynamic light scattering (DLS) and Zeta potential measurements were conducted on a Malvern Zetasizer Ultra Dynamic Light Scattering system in backscattering mode (173°). DLS and Zeta potential measurements were performed respectively in a glass cuvettes and disposable folded capillary cells. All measurements were performed in triplicate at

25°C after equilibrating inside the system for 240 seconds, sample concentration was tuned to achieve system attenuator values between 9-10. DLS data processing was performed using the Malvern "ZS Explorer" software using the "general purpose" analysis model, Zeta potential data processing was performed in the same software using the "monomodal" analysis model.

*UV-vis analysis.*

UV-VIS spectra were recorded on a PerkinElmer Lambda 365.

*X-ray scattering analysis.*

The Pair Distribution Function (PDF) measurement was conducted at beamline P21.1 at DESY in Hamburg, Germany in rapid acquisition mode, using a Varex 2D detector (2880 × 2880 pixels and 150 × 150 μm pixel size) with a sample to detector distance of 800 mm. The incident wavelength of the X-rays was λ = 0.122 A. Calibration of the experimental setup was performed using a nickel standard.

*Variable temperature NMR measurements.*

Variable temperature $^{1}H$ NMR measurements were recorded on a Bruker Avance III NMR spectrometer operating at 600.13 MHz proton frequency, the instrument was equipped with an indirect 5-mm BBI probe. The probe is provided with self-shielded z-gradients. For experiments performed below 318K the temperature was calibrated using a methanol standard showing accuracy within +/- 0.2 K. For variable temperature NMR measurements above 318 K a glycerol standard was used for calibration.

*NMR measurements on PA-PEG functionalized NCs.*

Nuclear magnetic resonance (NMR) measurements for nanocrystal (NC) functionalizations with (2-(2-(2-hydroxyethoxy)ethoxy)ethyl)phosphonic acid (PA-PEG) were recorded on a Bruker Avance III NMR spectrometer (Titration with PA-PEG and transfer to water) operating at 600.13 MHz proton frequency. The instrument was equipped with a direct observe 5-mm BBFO smart probe (for $^{31}P$ NMR) or with an indirect 5-mm BBI probe. Both probes are provided with self-shielded z-gradients. The experiments were performed at 298 K and the temperature was calibrated using a methanol standard showing accuracy within +/- 0.2 K.

All other $^{1}H$ NMR measurements for functionalization with PA-PEG were recorded at a temperature of 298 K on a Bruker Avance III HD NMR spectrometer operating at 600.13 MHz proton frequency, the instrument was equipped with a cryogenic QCI-F probe. All other $^{31}P$ NMR measurements for functionalization with PA-PEG were recorded at a temperature of 298 K on a Bruker Avance Neo spectrometer operating at 500.13 MHZ proton frequency, the instrument was equipped with a BBFO probehead. Probes for both spectrometers are provided with self-shielded z-gradients. The temperature was calibrated using a methanol standard showing accuracy within +/- 0.2 K.

*NMR measurements on PA-hex-PEG and Nitrodopamine-mPEG functionalized NCs.*

Nuclear magnetic resonance (NMR) measurements for nanocrystal (NC) functionalizations with (6-(2-(2-(2-hydroxyethoxy)ethoxy)ethoxy)hexyl)phosphonic acid (PA-hex-PEG) and N-(4,5-dihydroxy-2-nitrophenethyl)-2-(2-(2-methoxyethoxy)ethoxy)acetamide (Nitrodopamine-mPEG) were recorded on a Bruker Avance III HD NMR spectrometer operating at 600.13 MHz proton frequency, the instrument was equipped with a cryogenic QCI-F probe. $^{31}P$ NMR measurements for functionalization with PA-hex-PEG were recorded at a temperature of 298 K on a Bruker Avance Neo spectrometer operating at 500.13 MHZ proton frequency, the instrument was equipped with a BBFO probehead. Probes for both spectrometers are provided with self-shielded z-gradients. The temperature was calibrated using a methanol standard showing accuracy within +/- 0.2 K.

*NMR measurements on synthesized ligands.*

$^{1}H$, $^{13}C\{^{1}H\}$, $^{31}P\{^{1}H\}$ and 2D NMR measurements for synthesized ligands were recorded at a temperature of 298 K on a Bruker Avance Neo spectrometer operating at 500.13 MHZ proton frequency, the instrument was equipped with a BBFO probehead. The probe is provided with self-shielded z-gradients. The temperature was calibrated using a methanol standard showing accuracy within +/- 0.2 K.

*NMR experimental parameters.*

For quantitative 1D $^{1}H$ measurements, 64k data points were sampled with the spectral width set to 20 ppm and a relaxation delay of 30s. Concentrations were obtained using the digital ERETIC method.[2] DOSY measurements were performed with a double stimulated echo and bipolar gradient pulses (dstebpgp2s). The gradient strength was varied quadratically from 2-95% of the probe's maximum value in 8 steps if a diffusion filtered slice was required or 32 steps if the creation of a pseudo 2D spectrum was required. The gradient pulse duration and diffusion delay were optimized to ensure a final attenuation of the signal in the final increment of less than 10% relative to the first increment. The diffusion coefficients were obtained by fitting a modified Stejskal-Tanner equation to the signal intensity decay:

$$I = I_0 e^{-(\gamma\delta g)^2 D(\Delta - 0.6\delta)}$$

I are the signal intensities, D are the linear diffusion coefficients, $\gamma$ is the gyromagnetic ratio of the studied nucleus, g is the gradient strength, $\delta$ is the pulsed field gradient duration and $\Delta$ is the diffusion delay. A correction factor of 0.6 is applied for $\delta$ due to the smoothed squared pulse shape used for the gradient pulses. For 1D $^{31}P\{^{1}H\}$ measurements, in the zgpg30 pulse sequence 25000 data points were sampled with the spectral width set to 270.81 ppm and 4k scans, LB was set to 40 Hz during spectrum post-processing. For 1D $^{13}C\{^{1}H\}$ measurements, in the zgpg30 pulse sequence 120480 data points were sampled with the spectral width set to 239.49 ppm and 4k scans.

*Spin filtration purification in MeOH and $H_2O$.*

An NC suspension containing maximum 50 mg material dissolved in 2 ml solvent is transferred to a pre-rinsed Sartorius Vivaspin (30000 MWCO) spin-filtration tube via a 0.2 $\mu$m syringe filter. The suspension is diluted to a volume of 20 ml with MeOH or Milli-Q water, the solution was then allowed to spin in a centrifuge for 30 mins at 2100 rcf. For phosphonic acid NC functionalizations 3 spin filtration cycles were performed per sample using MeOH, for nitrodopamine-mPEG NC functionalizations a minimum of 2 spin filtration cycles using Milli-Q water were performed until the filtrate was colorless. The concentrate was collected, evaporated and suspended in (deuterated) MeOH or (deuterated) $H_2O$, 30 minutes of sonication was performed to ensure that all agglomerates were resuspended and to minimize insolubles.

*Titration with PA-PEG and PA-hex-PEG.*

A small amount of the purified toluene NC stock suspension was evaporated to yield approximately 45 mg functionalized material. The NCs were suspended in 0.5 ml absolute EtOH and sonicated for 30 mins, after which the solvent was evaporated again. The NCs were then suspended in 0.5 ml MeOD and sonicated for 30 mins, a quantitative $^{1}H$ NMR measurement was performed using the digital ERETIC method to determine the MEEAA concentration. Care was taken to subtract the MeOH solvent peak, which partly overlaps with MEEAA signals, from the calculation to ensure accurate concentration determination. Next, a stock solution containing at least 3 equivalents of either PA-PEG or PA-hex-PEG was created in MeOD. The titration was performed by addition of PA-PEG or PA-hex-PEG in steps of 0.1 eq, at each addition step the NMR tube was flipped, then mixed using vortex rotation for 2 minutes followed by sonication for a few seconds.

*NC functionalization with PA-PEG and PA-hex-PEG.*

In a typical functionalization the same method as during the titration with PA-PEG or PA-hex-PEG is used. Except here 1.5 equivalents of phosphonic acid are added all at once to the MEEAA functionalized NCs, stirred and sonicated 10 mins, followed by purification using spin filtration to yield pure PA-PEG or PA-hex-PEG functionalized NCs.

*Titration with $D_2O$.*

NCs functionalized with PA-PEG or PA-hex-PEG were purified using spin filtration as described above, the concentrate was evaporated and resuspended in 500 $\mu$L MeOD. $D_2O$ was added in a stepwise manner to achieve a final $D_2O$ concentration of 25, 50, 75 and 100% respectively. When required, the suspension was evaporated between measurements to achieve the desired $D_2O$ concentration without increasing sample volume above 0.8 ml.

*Titration with Nitrodopamine-mPEG*

A small amount of the purified toluene NC stock suspension was evaporated to yield approximately 10 mg

functionalized material. The NCs were suspended in 0.5 ml absolute EtOH and sonicated for 30 mins, after which the solvent was evaporated again. The NCs were then suspended in 0.5 ml MeOH and sonicated for 30 mins, after which the solvent was evaporated again. The NCs were suspended in 0.5 ml $D_2O$ and a quantitative $^1H$ NMR measurement was performed using the digital ERETIC method to determine the MEEAA concentration. 1.5 equivalents of nitrodopamine-mPEG (compared to the amount of MEEAA on the NCs) was preactivated in $D_2O$ by addition of 2 equivalents of NaOD (compared to the amount of nitrodopamine-mPEG required). Preactivated nitrodopamine-mPEG was added in steps of 0.5 equivalents while ensuring that pH remains above 5 during the addition, after each addition step the NMR tube was flipped, then mixed using vortex rotation for 2 minutes followed by sonication for a few seconds.

*NC functionalization with Nitrodopamine-mPEG*

In a typical functionalization the same method as during the titration with nitrodopamine-mPEG is used. Except here 1.5 equivalents of preactivated nitrodopamine-mPEG are added all at once while ensuring the pH remains above 5 during the entire addition. The mixture was stirred and sonicated 10 mins, followed by purification using spin filtration to yield pure nitrodopamine-mPEG functionalized NCs. The authors note that this method is scalable to higher amounts of NCs as long as the maximum loading allowed per spin filter is not exceeded.

*Influence of pH on ligand binding*

For all measurements 2 ml solvent was found to be the minimum required for the micro pH electrode to be able to measure pH values. A 5M NaCl stock solution was used to achieve a sample salt concentration of 0.01M, pH values were adjusted using 0.01M stock solutions of DCl and NaOD in $D_2O$.

Phosphonic acids: pure PA-PEG and PA-hex-PEG functionalized NCs in MeOH were created using above methods, the NC suspension was evaporated and resuspended in $D_2O$. $^{31}P$ NMR measurements were performed at several pH values. The amount of bound and unbound ligands in the $^{31}P$ spectra were quantified via a multi-peak fitting procedure (peak deconvolution).

Nitrodopamine-mPEG: pure nitrodopamine-mPEG functionalized NCs in Milli-Q water were created using above methods, the NC suspension was evaporated and resuspended in $D_2O$. Quantitative $^1H$ NMR measurements were performed at several pH values. The amount of bound and unbound ligands in the $^1H$ spectra were quantified via a multi-peak fitting procedure (peak deconvolution).

*Dynamic light scattering stability evaluation*

For all measurements pure functionalized NCs in MeOH (for phosphonic acids) or Milli-Q water (for nitrodopamine-mPEG) were created using above methods, the NC suspensions were evaporated and resuspended in Milli-Q water. For Z-average and zeta potential measurements NC concentration was tuned to achieve system attenuator values between 9-10. 2 ml solvent was found to be the minimum required for the micro pH electrode to be able to measure pH values and to perform Z-average and zeta potential measurements. All measurements were performed in triplicate at 25°C after equilibrating inside the system for 240 seconds.

Influence of pH on Z-average values and zeta potential. A filtered 5M NaCl stock solution was used to achieve a sample salt concentration of 0.01M, the suspensions were sonicated for 15 minutes and filtered through a 0.2 $\mu$M Supor syringe filter to remove dust before starting the titration. pH values were adjusted using 0.01M filtered stock solutions of HCl and NaOH in Milli-Q water.

Stability in 2× PBS: The suspension was filtered through a 0.2 $\mu$M Supor syringe filter, followed by pH adjustment to 7.4 using 0.01M filtered stock solutions of HCl and NaOH in Milli-Q water. PBS concentration was increased by stepwise addition of a filtered 10× PBS stock solution, pH was checked after each addition step and readjusted to 7.4 if required. Stability over time in 2× PBS measurements were performed in closed quartz cuvettes, which remained at room temperature and in closed conditions during the entire duration of the stability tests.

## Claims

**1.** A nanoparticle comprising

a. a nanocrystal comprising or essentially consisting of hafnium (IV) oxide ($HfO_2$) having a diameter equal or less than (≤) 15 nm, and

b. a plurality of dispersant molecules attached to the surface of said nanocrystal, the dispersant molecules comprising or essentially consisting of

i. a surface adsorption moiety selected from the group comprising a catechol or a gallol, particularly a 1,2-hydroxy-4-nitrophenyl moiety; and
ii. an oligo(ethyleneglycol) moiety.

**2.** The nanoparticle according to claim 1, wherein the nanocrystal has a diameter of ≤ 6nm, particularly wherein the diameter is ≤ 4nm, more particularly wherein the diameter is ≤3,5 nm.

**3.** The nanoparticle according to claim 1 or 2, wherein the nanocrystal is **characterized by** an aspect ratio of 0.5 to 0.9.

**4.** The nanoparticle according to any one of claims 1 to 3, wherein the dispersant molecule has a molecular mass of ≤500 g/mol, particularly of ≤400 g/mol.

**5.** The nanoparticle according to any one of claims 1 to 4, wherein the dispersant molecule comprises, particularly consists of,

i. a surface adsorption moiety selected from nitrodopamine, nitroDOPA, DOPA, dopamine, mimosine and
ii. an $(CH_2\text{-}CH_2\text{-}O)_nCH_3$ moiety, with n being an integer selected from 2, 3, 4 and 5; particularly wherein the dispersant molecule is selected from (examples).

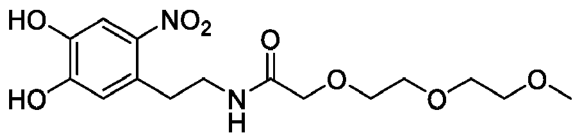

**6.** The nanoparticle according to any one of claims 1 to 5, wherein the density of dispersant molecules on the nanocrystal is 0.5-5 per $nm^2$.

**7.** The nanoparticle according to any one of claims 1 to 6, wherein the nanoparticle comprises a dye molecule for optical localisation.

**8.** A composition comprising a plurality of nanoparticles according to any one of claims 1 to 5.

**9.** The composition according to claim 8, wherein the composition is a stable aqueous suspension.

**10.** The composition according to claim 9, wherein the composition has a pH from pH 6 to pH 10, particularly a pH ranging from pH 6.5 to pH 8.0.

**11.** The composition according to claim 7 or 8, wherein 80% of the nanoparticles have a diameter between 2.0 nm and 5.0 nm, particularly wherein 85% of the nanoparticles have a diameter between 2.5 nm and 4.5 nm.

**12.** A composition according to any one of claims 8 to 11 for use in medicine.

**13.** A composition according to any one of claims 8 to 11 for use as a radiotherapy enhancing agent (radiosensitizer).

**14.** A composition according to any one of claims 8 to 11 for use as a computed tomography (CT) contrast agent.

**15.** A method to manufacture a composition according to any one of claims 8 to 11, comprising

a. providing a suspension of hafnium (IV) oxide ($HfO_2$) nanocrystals stabilized by a carboxylic acid ligand, particularly by MEEAA, in aqueous medium;
b. adding to the suspension an alkaline solution of a dispersant molecule, wherein the dispersant molecule is composed of

i. a surface adsorption moiety comprising two aromatic hydroxide functions, the surface adsorption moiety being selected from the group comprising a catechol or a gallol, particularly a 1,2-hydroxy-4-nitrophenyl moiety; and
ii. an oligo(ethyleneglycol) moiety;

wherein both aromatic hydroxide functions are deprotonated in the alkaline solution;
c. adjusting the pH of the suspension to physiological pH;
d. optionally, isolating the composition, particularly by size exclusion / spin filtration.

Fig. 1

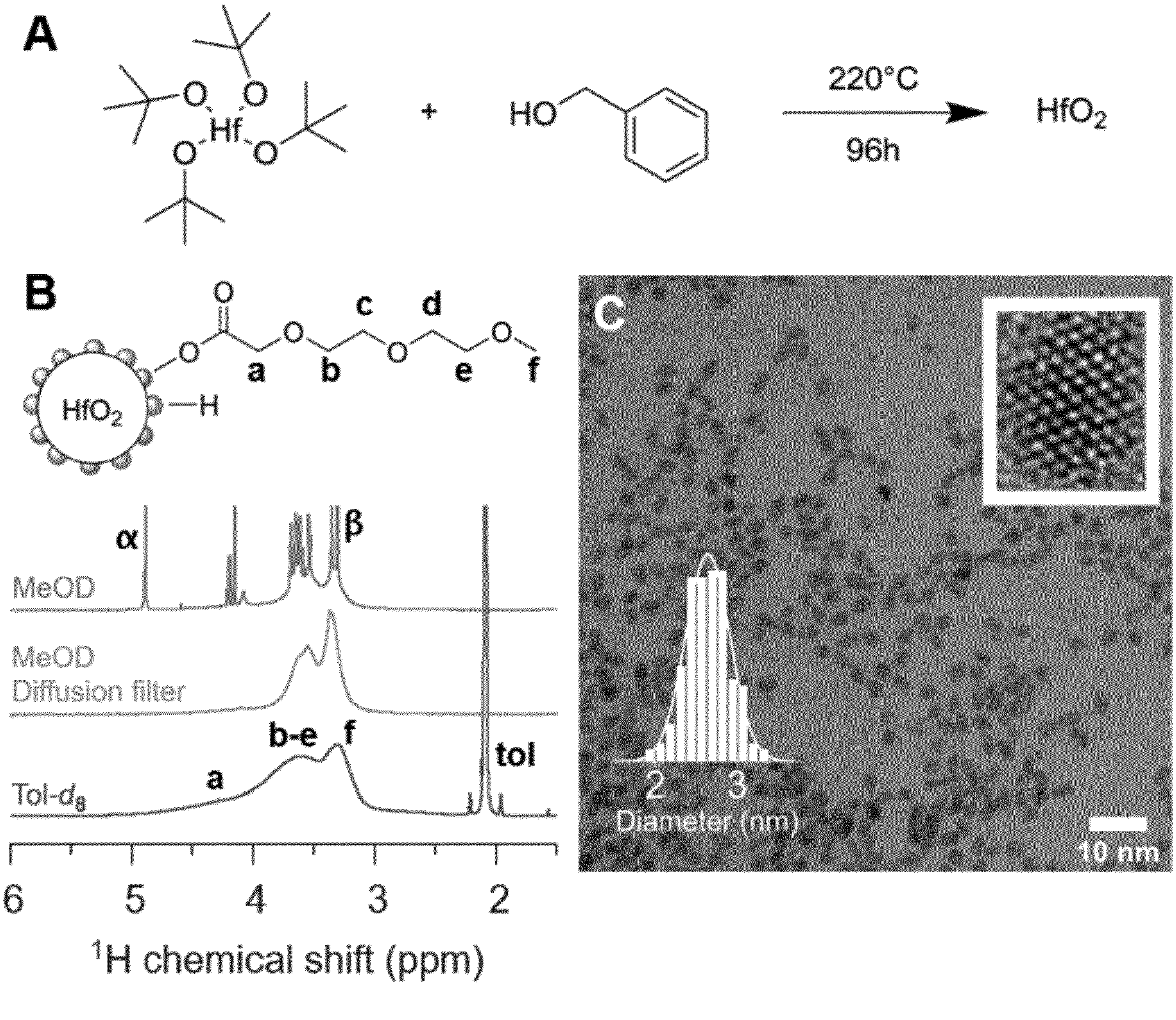
A
220°C
96h
B
MeOD
MeOD
Diffusion filter
Tol-$d_8$
6 5 4 3 2
$^1$H chemical shift (ppm)
C
Diameter (nm)
10 nm

Fig. 2

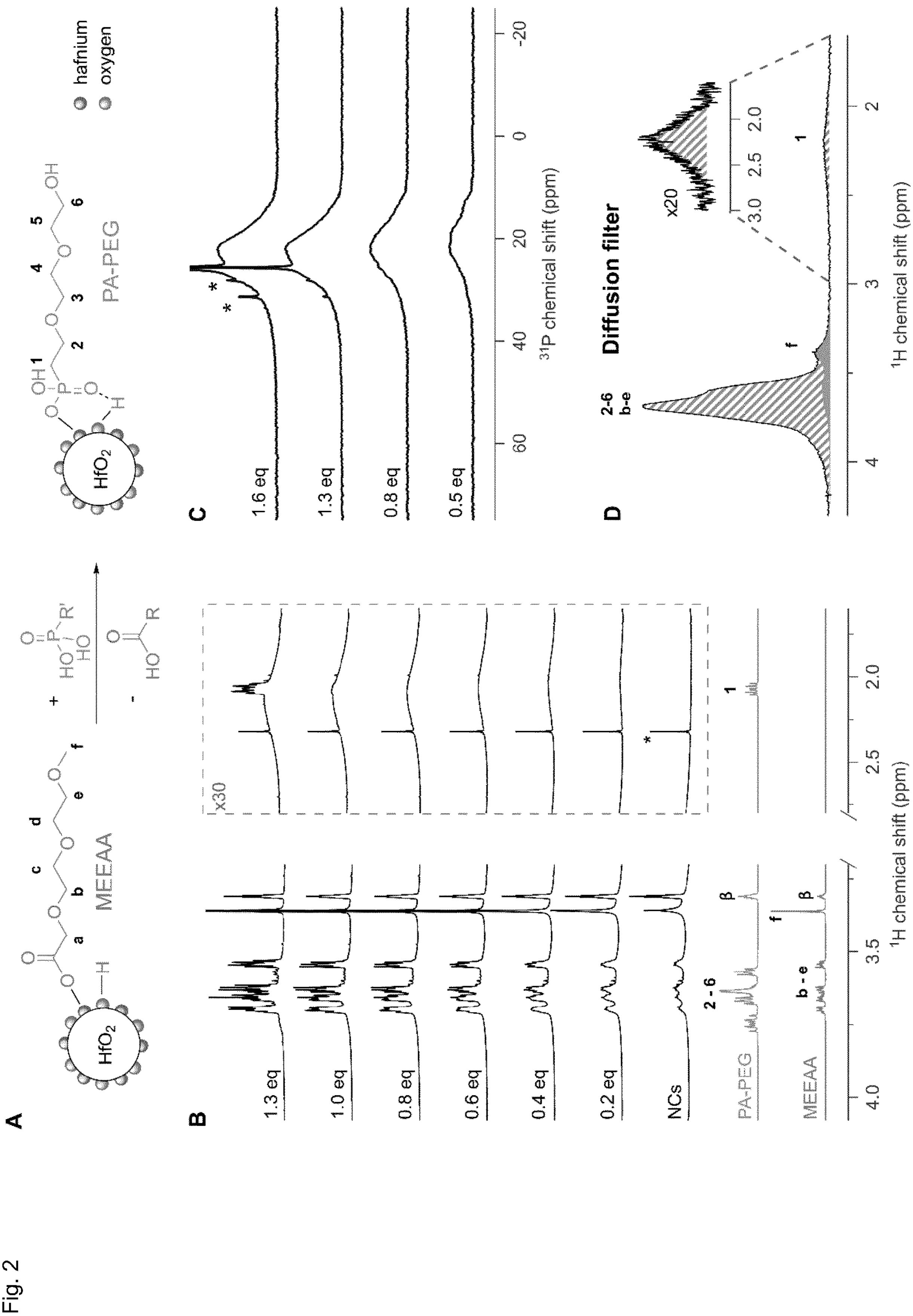
A
B
C
D
MEEAA
PA-PEG
hafnium
oxygen
Diffusion filter
x30
x20
1.6 eq
1.3 eq
1.0 eq
0.8 eq
0.6 eq
0.5 eq
0.4 eq
0.2 eq
NCs
31P chemical shift (ppm)
1H chemical shift (ppm)

Fig. 3

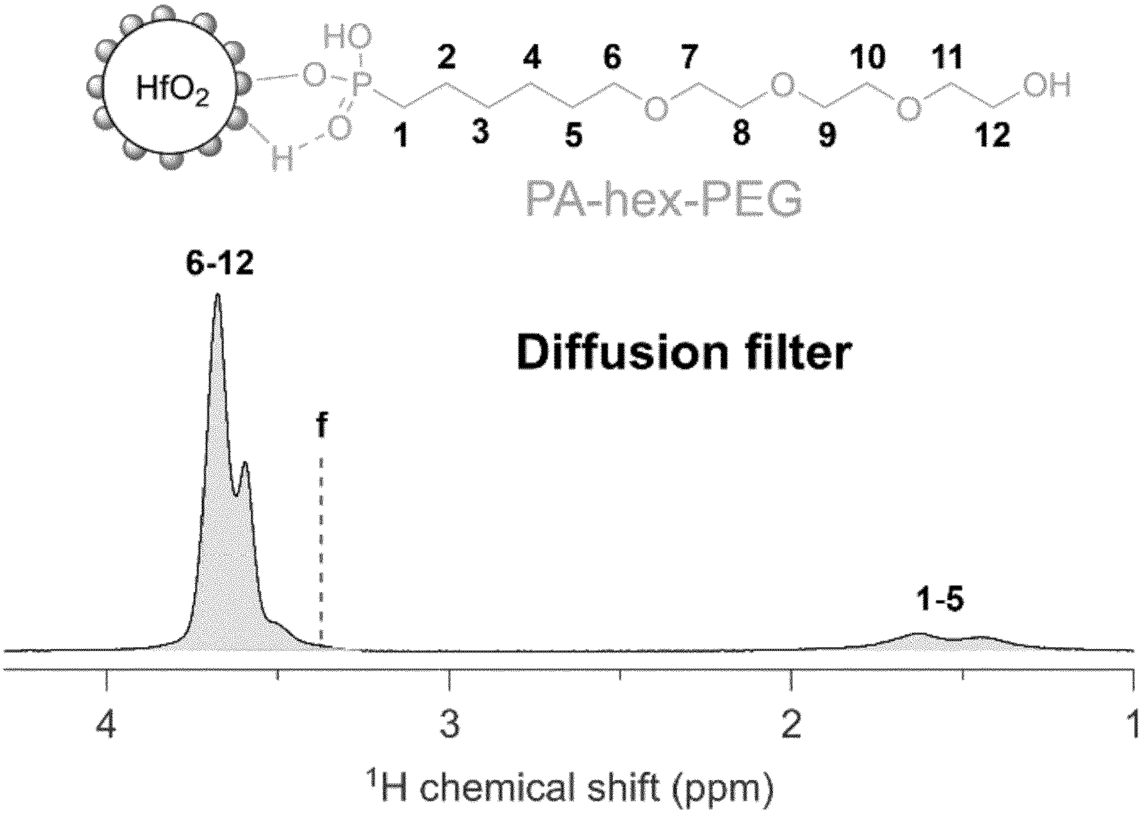
HfO2
PA-hex-PEG
6-12
Diffusion filter
f
1-5
4
3
2
1
1H chemical shift (ppm)

Fig. 4

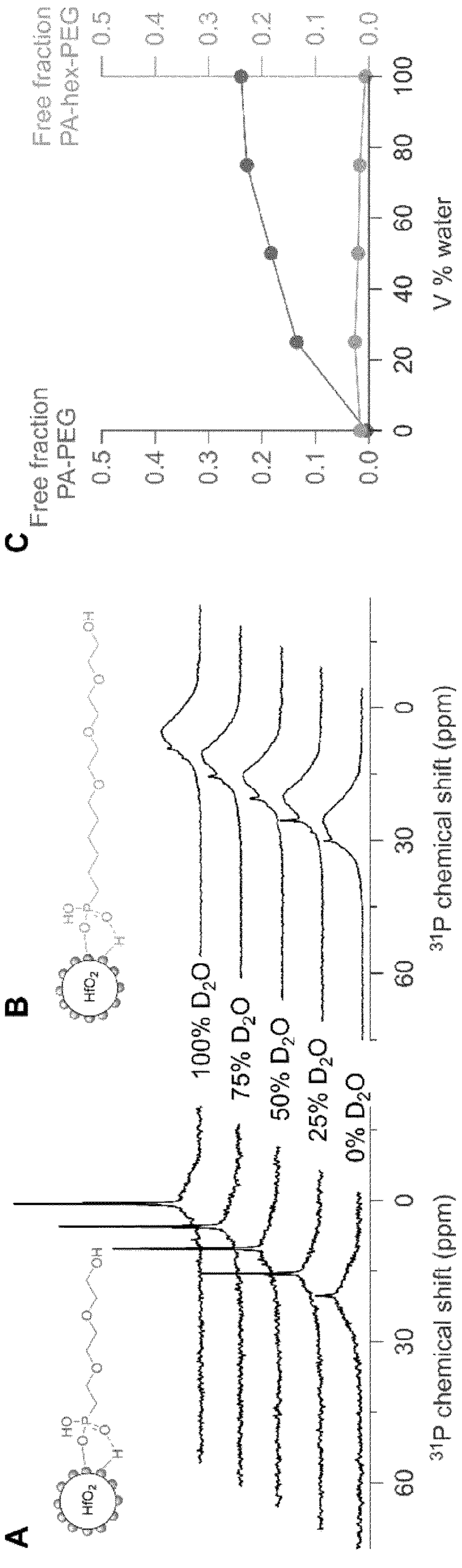
A
B
C
HfO2
100% D2O
75% D2O
50% D2O
25% D2O
0% D2O
31P chemical shift (ppm)
31P chemical shift (ppm)
Free fraction PA-PEG
Free fraction PA-hex-PEG
V % water

Fig. 5

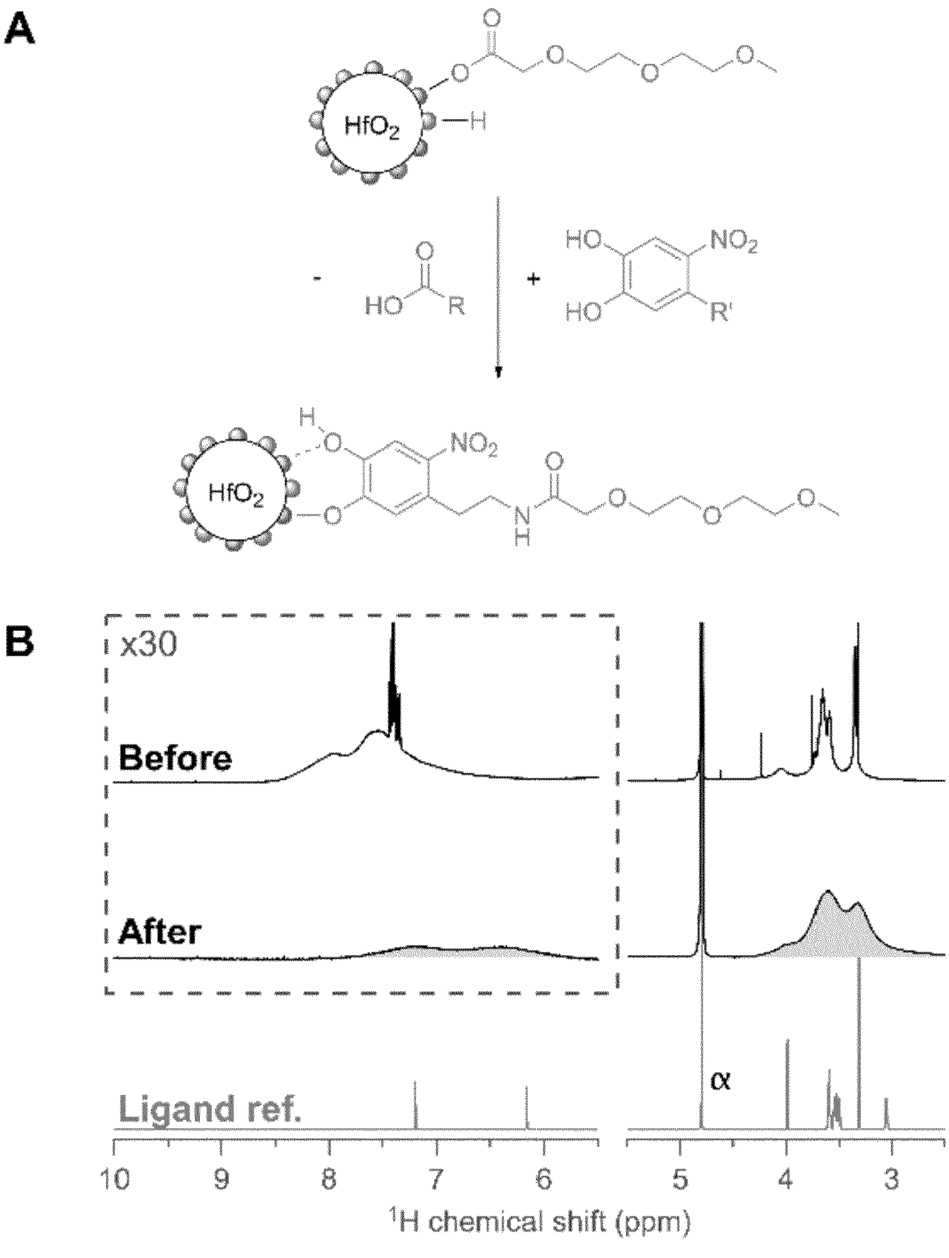
A
B
x30
Before
After
Ligand ref.
α
10
9
8
7
6
5
4
3
$^1$H chemical shift (ppm)

Fig.6

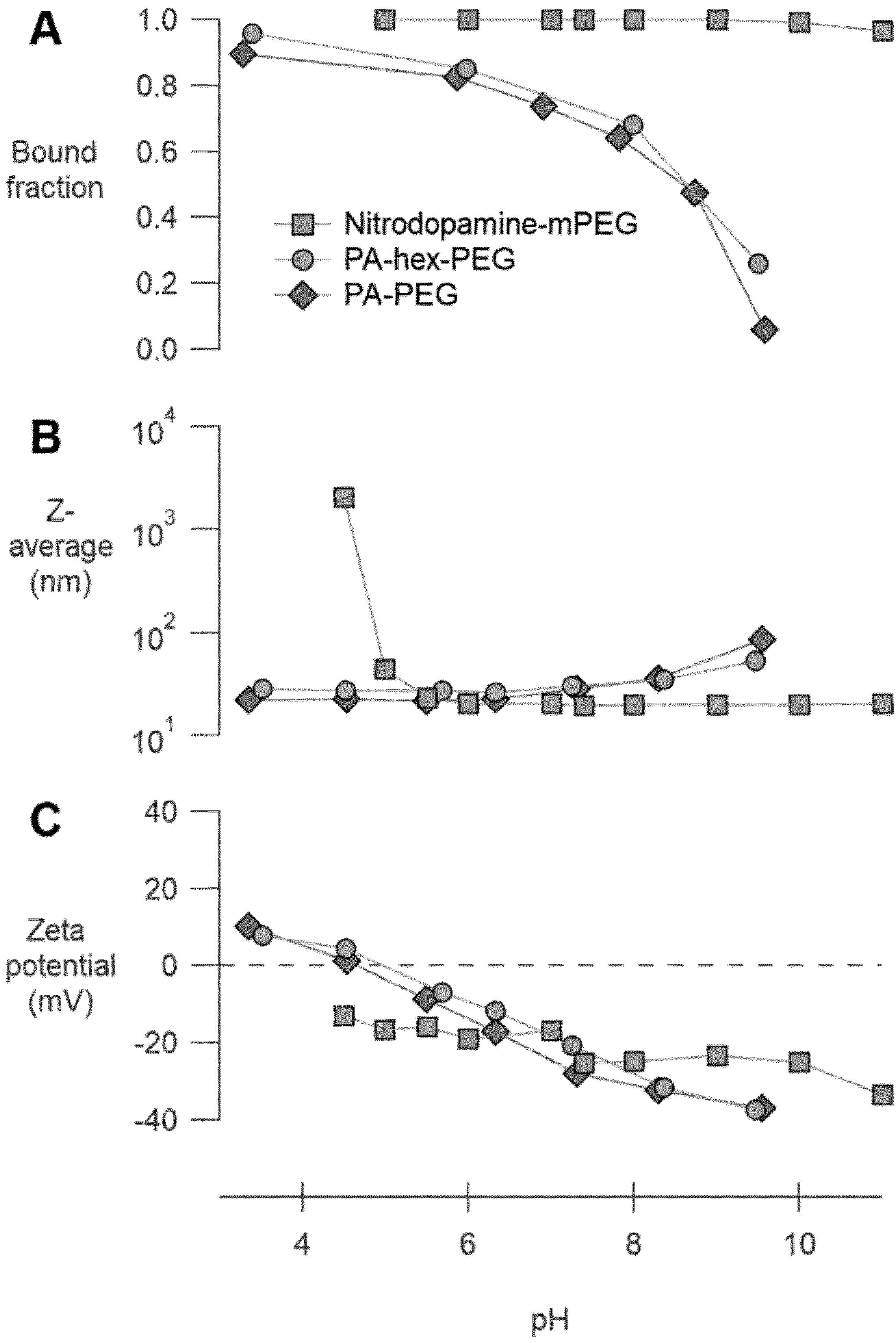
A
1.0
0.8
Bound fraction
0.6
0.4
0.2
0.0
Nitrodopamine-mPEG
PA-hex-PEG
PA-PEG
B
$10^4$
Z-average (nm)
$10^3$
$10^2$
$10^1$
C
40
20
Zeta potential (mV)
0
-20
-40
4
6
8
10
pH

Fig. 7

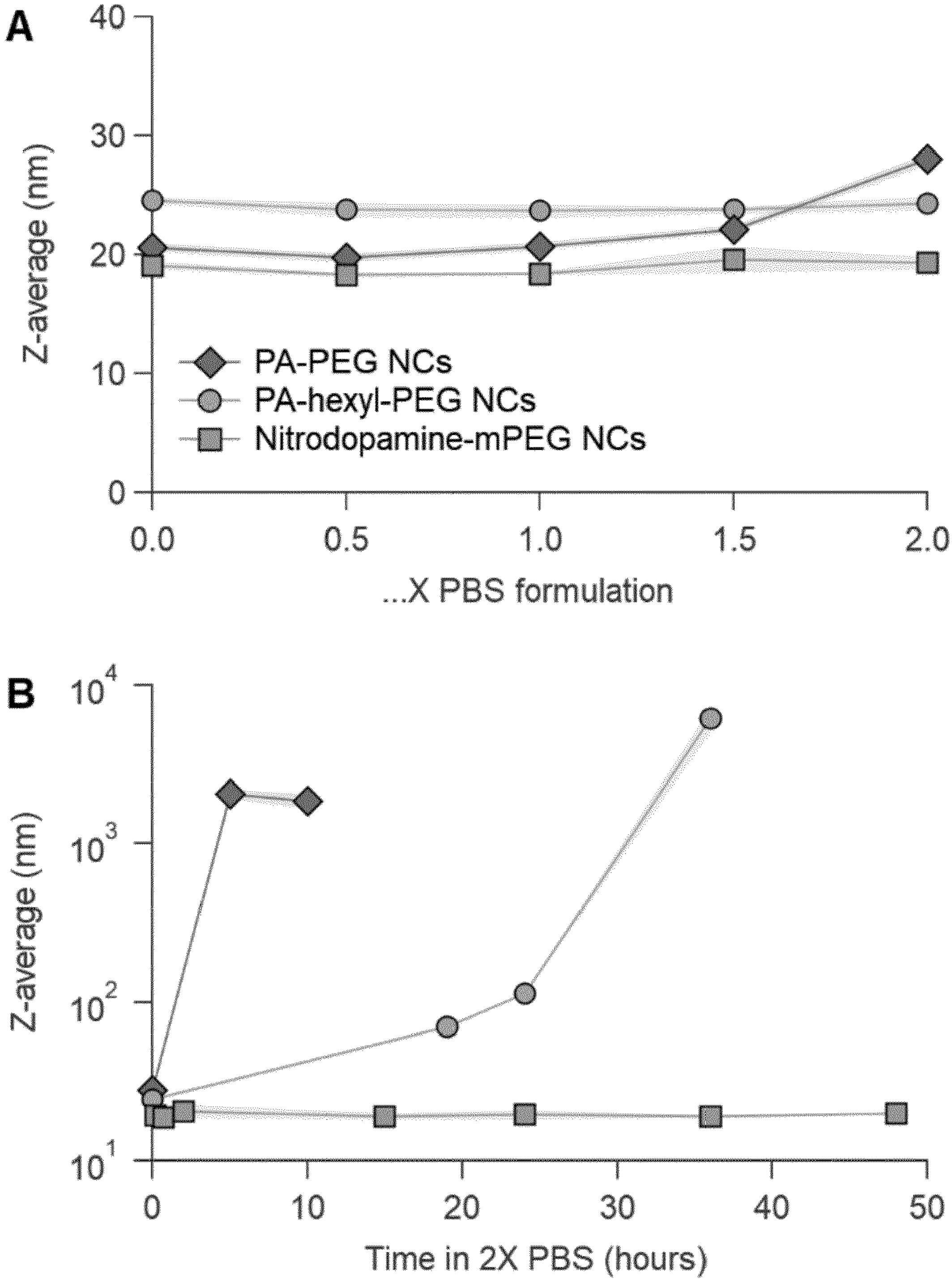
A
40
30
20
10
0
Z-average (nm)
PA-PEG NCs
PA-hexyl-PEG NCs
Nitrodopamine-mPEG NCs
0.0
0.5
1.0
1.5
2.0
...X PBS formulation
B
$10^4$
$10^3$
$10^2$
$10^1$
Z-average (nm)
0
10
20
30
40
50
Time in 2X PBS (hours)

Fig. 8

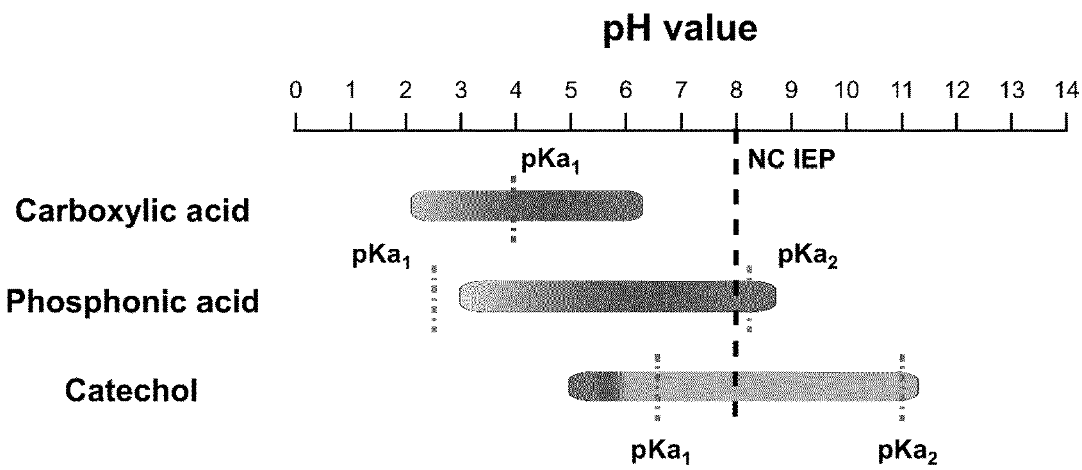
pH value
0
1
2
3
4
5
6
7
8
9
10
11
12
13
14
pKa1
NC IEP
Carboxylic acid
pKa1
pKa2
Phosphonic acid
Catechol
pKa1
pKa2

Fig. 9

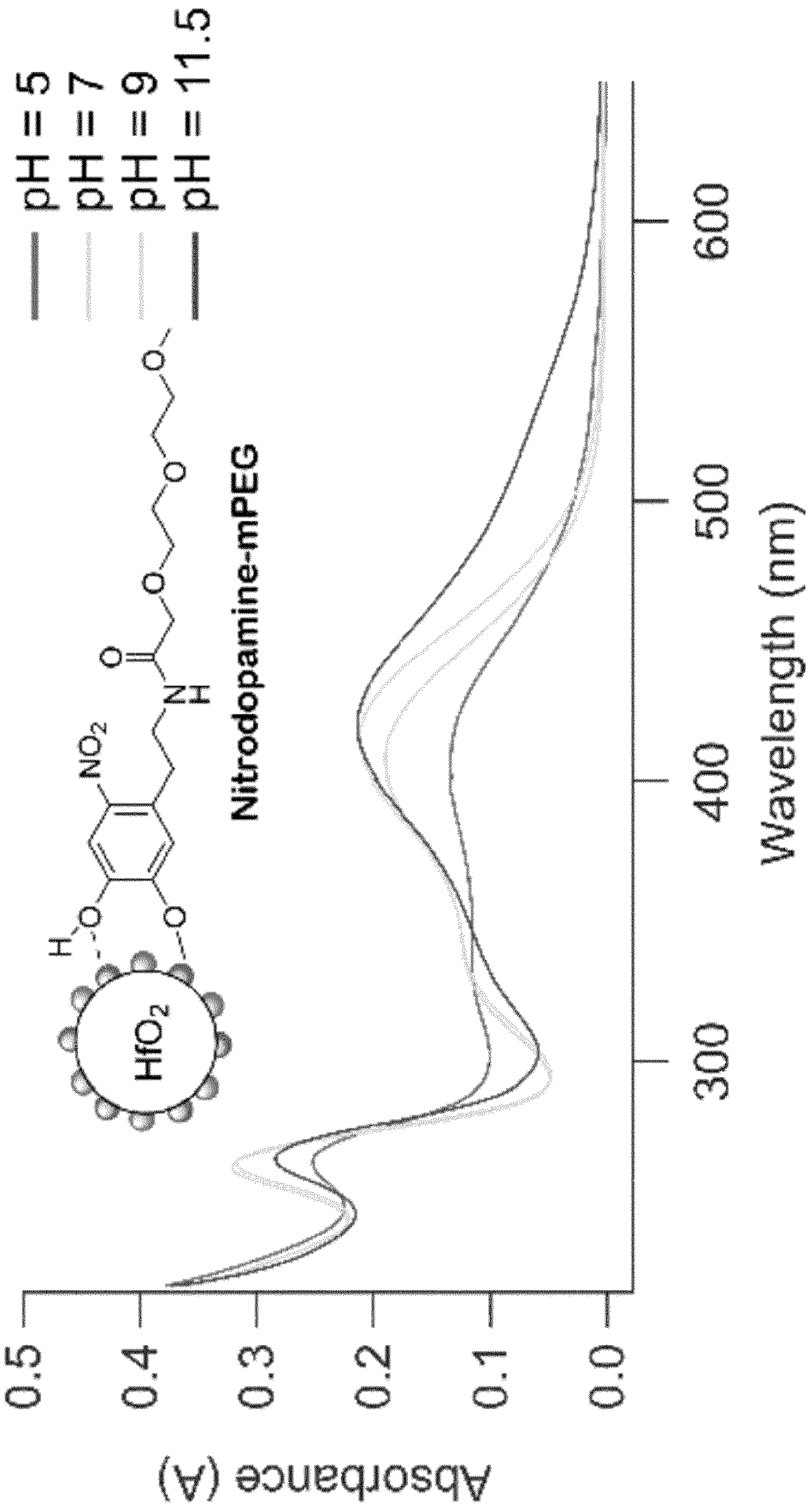
Nitrodopamine-mPEG
pH = 5
pH = 7
pH = 9
pH = 11.5
Absorbance (A)
0.5
0.4
0.3
0.2
0.1
0.0
300
400
500
600
Wavelength (nm)

Europäisches Patentamt
European Patent Office
Office européen des brevets

# EUROPEAN SEARCH REPORT

Application Number
EP 22 17 5125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | DEBLOCK LOREN ET AL: "Mapping out the Aqueous Surface Chemistry of Metal Oxide Nanocrystals: Carboxylate, Phosphonate, and Catecholate Ligands", JACS AU, vol. 2, no. 3, 28 March 2022 (2022-03-28), pages 711-722, XP55979471, ISSN: 2691-3704, DOI: 10.1021/jacsau.1c00565 Retrieved from the Internet: URL:https://www.ncbi.nlm.nih.gov/pmc/articles/PMC8969999/pdf/au1c00565.pdf> * the whole document * ----- | 1-15 | INV. C01G27/02 |
| A,D | OKADA ET AL.: CHEMISTRYSELECT, vol. 3, no. 29, 2018, pages 8458-8461, XP002807950, * the whole document * ----- | 1-15 | |
| A | DE ROO JONATHAN ET AL: "Unravelling the Surface Chemistry of Metal Oxide Nanocrystals, the Role of Acids and Bases", JOURNAL OF THE AMERICAN CHEMICAL SOCIETY, vol. 136, no. 27, 9 July 2014 (2014-07-09), pages 9650-9657, XP055855778, ISSN: 0002-7863, DOI: 10.1021/ja5032979 Retrieved from the Internet: URL:https://pubs.acs.org/doi/pdf/10.1021/ja5032979> * "experimental", "results and discussion" * ----- | 1-15 | TECHNICAL FIELDS SEARCHED (IPC): C01G |

-/--

The present search report has been drawn up for all claims

1

| Place of search | Date of completion of the search | Examiner |
|---|---|---|
| The Hague | 11 November 2022 | Corrias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 22 17 5125

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUÉNIN ERWANN ET AL: "Catechol versus bisphosphonate ligand exchange at the surface of iron oxide nanoparticles: towards multi-functionalization", JOURNAL OF NANOPARTICLE RESEARCH, SPRINGER NETHERLANDS, DORDRECHT, vol. 16, no. 11, 9 October 2014 (2014-10-09), pages 1-13, XP035405148, ISSN: 1388-0764, DOI: 10.1007/S11051-014-2596-7 [retrieved on 2014-10-09] * the whole document * ----- | 1-15 | |

TECHNICAL FIELDS SEARCHED (IPC)

The present search report has been drawn up for all claims

1

| Place of search | Date of completion of the search | Examiner |
|---|---|---|
| The Hague | 11 November 2022 | Corrias, M |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **MIN, Y.** *Chemical Reviews,* 2015, vol. 115 (19), 11147-11190
- **SAMBROOK et al.** Molecular Cloning: A Laboratory Manual. Cold Spring Harbor Laboratory Press, 2012
- **AUSUBEL et al.** Short Protocols in Molecular Biology. John Wiley & Sons, Inc, 2002
- **MAGGIORELLA et al.** *Future Oncol.,* September 2012, vol. 8 (9), 1167-81
- **MCGINNITY.** *Nanoscale,* 2016, vol. 8, 13627-13637
- **LAURIA et al.** *ACS Nano,* 2013, vol. 7 (8), 7041-7052
- **DE ROO et al.** *Chem Mater,* 2018, vol. 30 (15), 5485-5492
- **OKADA et al.** *ChemistrySelect,* 2018, vol. 3 (29), 8458-8461
- **DRAGOMANET.** *Chemistry of Materials,* 2017, vol. 29 (21), 9416-9428
- **AMSTADET.** *The Journal of Physical Chemistry C,* 2011, vol. 115 (3), 683-691
- **AMSTAD et al.** *Nano Letters,* 2009, vol. 9 (12), 4042-4048
- **GILLICHET.** *Journal of the American Chemical Society,* 2011, vol. 133 (28), 10940-10950
- **XIE et al.** *Adv. Mater.,* 2007, vol. 19 (20), 3163-3166
- **BAE et al.** *Bioconjugate Chemistry,* 2010, vol. 21 (3), 505-512